# EUROPÄISCHE PATENTANMELDUNG

(11) **EP 4 451 487 A1**
(43) Veröffentlichungstag der Anmeldung: **23.10.2024**
(21) Anmeldenummer: 23168643.7
(22) Anmeldetag: 19.04.2023
(51) Int. Cl.: H01R 43/052, B21F 1/02, B21F 23/00, H01R 43/28, B25J 15/02, H01R 43/048

(54) **MOBILES KABELANSCHLUSSMODUL UND ANORDNUNG ZUM KONFEKTIONIEREN VON KABELN SOWIE VERFAHREN ZUM ANSCHLIESSEN EINES KABELS AN EINE SOLCHE ANORDNUNG**

(71) Anmelder: komax Holding AG, 6036 Dierikon (CH)
(72) Erfinder: Conte, Alois, 6030 Ebikon (CH); Viviroli, Stefan, 6048 Horw (CH)
(74) Vertreter: Inventio AG

(57) **Zusammenfassung**

Eine Anordnung zum Konfektionieren von Kabeln besteht aus einer Kabelbearbeitungsmaschine mit wenigstens einer und vorzugsweise mehreren Bearbeitungsstationen (2, 3) und aus einem mobilen Kabelanschlussmodul (10) für diese Anordnung, wobei das Kabelanschlussmodul (10) eine Halteeinrichtung umfasst, mittels welcher das Kabelanschlussmodul (10) an ein Kabel (21) anbringbar ist und dass das Kabelanschlussmodul (10) derart ausgestaltet ist, dass es zusammen mit dem Kabel (21) an eine Kabelbearbeitungsmaschine (1) der Anordnung anschliessbar ist.

## Beschreibung

Die Erfindung betrifft ein mobiles Kabelanschlussmodul. Weiterhin betrifft die Erfindung eine Anordnung zum Konfektionieren von Kabeln gemäss dem Obergriff von Anspruch 11. Weiterhin betrifft die Erfindung ein Verfahren zum Anschliessen eines Kabels an eine Anordnung zum Konfektionieren von Kabeln.

Eine Anordnung zum Konfektionieren von Kabeln ist beispielsweise aus der EP 1 447 888 A1 bekannt geworden. Die Anordnung besteht im Wesentlichen aus einer mehrere Bearbeitungsstationen umfassende Kabelbearbeitungsmaschine. Bei der Konfektionierung von Kabeln in der Kabelbearbeitungsmaschine werden Kabel beispielsweise abgelängt und abisoliert, danach können die Kabelenden gecrimpt sowie gegebenenfalls mit Tüllen versehen und mit Steckergehäusen bestückt werden. Unter "Crimpen" versteht man die Herstellung einer nicht lösbaren elektrischen und mechanischen Verbindung (Crimpverbindung) durch plastische Deformation zwischen einem Leiter und einem Crimpkontakt. Die Kabelbearbeitungsmaschine gemäss EP 1 447 888 A1 weist eine Abläng- und Abisoliereinheit und zwei Bearbeitungstationen mit Crimppressen auf. Die Kabelbearbeitungsmaschine verfügt weiter über einen als Bandantrieb ausgebildeten Fördereinheit zum Bewegen des Kabels entlang einer Längsachse. Die Abläng- und Abisoliereinheit ist auf der Längsachse angeordnet. Da sich die beiden Crimppressstationen jedoch neben der Längsachse befinden, muss das Kabel mittels Zuführeinheiten, die als mit Greifern versehenen Schwenkarmen ausgestaltet sind, zu den jeweiligen Crimppressen geführt werden. In der ersten Crimppresse wird dabei das voreilende Kabelende und mit der zweiten Crimppresse das nacheilende Kabelende mit Crimpkontakten bestückt. Die Kabel, wie beispielsweise isolierte Litzen oder Vollleiter aus Kupfer oder Stahl, die auf der Kabelbearbeitungsmaschine verarbeitet werden, werden üblicherweise in Gebinden etwa in Form von Fässern oder Rollen bereit gestellt und mit einer Kabelfördereinrichtung zu den Bearbeitungsstationen der Kabelbearbeitungsmaschine geführt. Da die von Fässern, Kabelrollen oder Kabelbündeln stammenden Kabel mehr oder weniger stark gekrümmt und mit Drall versehen sind, kann es notwendig sein, die Kabel zu richten. Gerade gerichtete Kabel sind wichtig, um die auf der Anordnung bzw. mit der Kabelbearbeitungsmaschine vorgesehenen Prozessschritte wie Abisolieren und Crimpen zuverlässig ausführen zu können. Um die Kabel möglichst gerade zu richten, werden sie mittels der Fördereinheit durch eine Richteinrichtung gezogen. Eine derartige Richteinrichtung ist beispielsweise aus der EP 2 399 856 A1 bekannt geworden. Die Richteinrichtung weist einander gegenüberliegende Rollenreihen auf; das zu richtende Kabel wird zwischen den Rollen der beiden Rollenreihen hindurch geführt.

Wenn der Kabelvorrat, beispielsweise eine Kabelrolle, ein Kabelfass oder ein anderes Gebinde, zu Ende geht, muss ein neues Kabel von einem neuen Gebinde entnommen und der Kabelbearbeitungsmaschine zugeführt werden. Je nach Produktionsauftrag wird anderes Kabelmaterial benötigt, das auf der Kabelbearbeitungsmaschine gerüstet wird. Es kann für die Kabelkonfektionierung zum Beispiel notwendig werden, andere Kabel, beispielsweise Kabel mit einer anderen Farbe, zu verarbeiten. Bevor das zweite Kabel verwendet werden kann, muss das erste Kabel vorher aus der Kabelbearbeitungsmaschine entfernt werden. Hierzu wird die Kabelfördereinrichtung in eine spezielle Betriebsart gebracht, in der der Kabeltransport mit der Fördereinheit rückwärts erfolgt und das Kabel so lange in Gegenrichtung bewegt wird, bis das Kabel die Kabelfördereinrichtung verlässt. Dieser Prozessschritt ist dem Fachmann unter der Bezeichnung "Ausfädeln" bekannt. Nach dem Ausfädeln kann das neue Kabel verwendet werden. In der Praxis hat sich gezeigt, dass die Handhabung des Kabels bei einem Kabelwechsel schwierig sein kann; insbesondere das Ausfädeln und Einfädeln ist anspruchsvoll. Für ein neues Kabel muss das Kabel manuell durch einen oder mehrere Richtapparate der Kabelbearbeitungsmaschine gefädelt werden. Danach wird die Kabelspitze manuell oder automatisch in die Fördereinheit eingeführt, welche dann das Kabel automatisch einzieht, womit das Kabel an die Kabelbearbeitungsmaschine angeschlossen werden kann. Nachteilig an der beschriebenen Lösung ist, dass das Einfädeln des Kabels an der Kabelbearbeitungsmaschine zeitaufwändig und fehleranfällig ist und jedes Mal wiederholt werden muss, auch wenn ein früheres Kabel wieder verwendet werden soll. Zudem sind je nach Kabelmaterial unterschiedliche Richt- und Führungsvorrichtungen erforderlich, so dass unter Umständen mehrere verschiedene Vorrichtungen wie Richtapparate mit verschiedenen Rollenkonfigurationen auf der Kabelbearbeitungsmaschine montiert sein müssen oder die Kabelbearbeitungsmaschine je nach Kabelmaterial umgebaut werden muss. Weiter kann es passieren, dass das Kabel beim Ausfädeln aus der Kabelbearbeitungsmaschine eine unerwünschte Schlaufe bilden kann. Diese Schlaufe kann zwischen der Fördereinheit und dem Richtapparat sich ausbilden, weil der Kabelanfang vom Trennmesser Abläng- und Abisoliereinheit bis vor die Fördereinheit zurücktransportiert werden muss und sich nicht ohne weiteres durch den Richtapparat stossen lässt. Die Schlaufe kann schliesslich bei anderen Maschinenteilen einhängen und zu Funktionsstörungen führen.

Es ist eine Aufgabe der vorliegenden Erfindung, die Nachteile des Bekannten zu vermeiden und insbesondere die Handhabung eines Kabels bei einem Kabelwechsel zu verbessern.

Diese Aufgabe wird erfindungsgemäss mit einem mobilen Kabelanschlussmodul mit den Merkmalen des Anspruchs 1 gelöst. Das mobil Kabelanschlussmodul für eine Kabelbearbeitungsmaschine umfassende Anordnung zum Konfektionieren von Kabeln umfasst eine Halteeinrichtung, mittels welcher das Kabelanschlussmodul für eine wenigstens temporär feste Verbindung zwischen Kabelanschlussmodul und Kabel an das Kabel zum Schaffen einer mobilen, einfach handhabbaren Einheit, die manuell oder beispielsweise von einem Roboter oder einer anderen Transfereinrichtung erfasst und zur Kabelbearbeitungsmaschine gebracht werden kann, anbringbar ist. Das Kabelanschlussmodul ist dabei derart ausgestaltet, dass es zusammen mit dem Kabel an die Kabelbearbeitungsmaschine der Anordnung anschliessbar ist. Das Kabelanschlussmodul ist somit an ein Kabel anbringbar und hält sich zum Anschliessen an die Kabelbearbeitungsmaschine am Kabel fest. Zum Festhalten des Kabels kann das Kabelanschlussmodul mit klemmenden Haltemitteln zum Bilden der Halteeinrichtung ausgerüstet sein. Die feste Verbindung zwischen Kabelanschlussmodul und Kabel ist jedoch nur eine temporäre Verbindung insbesondere für den Zeitraum, bis das Kabelanschlussmodul zusammen mit dem Kabel an die Kabelbearbeitungsmaschine angeschlossen ist. Nachdem das Kabelanschlussmodul an die Kabelbearbeitungsmaschine angeschlossen an die Maschine montiert bzw. angeschlossen ist, wird es Bestandteil der Kabelbearbeitungsmaschine. In Arbeitsstellung, wenn die Kabelkonfektionierung stattfindet, ist die festhaltende Beaufschlagung durch die Halteeinrichtung aufgehoben und das Kabel läuft durch das Kabelanschlussmodul, wobei es dabei einer Kabelvorbehandlung wie etwa einem Richtprozess unterworfen werden kann. Die Handhabung des Kabel bei einem Kabelwechsel lässt sich dank des Kabelanschlussmoduls erheblich verbessern.

Das Kabelanschlussmodul ist ersichtlicherweise eine kompakte und vergleichsweise kleine und leichte Einheit, so dass sie besonders handlich und mobil ist. Dank der vorteilhaften Mobilität kann das Kabelanschlussmodul von einer Person einfach und ohne grossen Kraftaufwand mit den Händen, allenfalls sogar nur mit einer Hand getragen und an den gewünschten Ort gebracht werden kann. Das Gewicht des Kabelanschlussmoduls kann weniger als 2 kg, bevorzugt weniger als 1 kg und bevorzugt weniger als 500 g betragen. Die Aussenabmessungen betragen etwa 30 cm x 20 cm x 10 cm, bevorzugt 25 cm x 10 cm x 3 cm oder weniger.

Der Anfang des Kabels des Kabelgebindes kann an einem beliebigen Ort von einer Bedienperson in das Kabelanschlussmodul bei geöffneter Halteeinrichtung eingelegt werden.

Die Halteeinrichtung lässt sich schliessen oder wird nach dem Einlegen geschlossen, Kabelanschlussmodul und Kabel sind nun mehr oder weniger fest miteinander verbunden. Das Kabelaufnahmemodul kann danach beispielsweise am oder in der Nähe des Gebindes deponiert werden.

Die Halteeinrichtung weist vorzugsweise eine oder mehrere lösbare Haltemittel wie etwa Haltebacken, welche das Kabel fixieren oder hemmen, damit die Kabelspitze nicht ungewollt seine Position verlässt. Indem die Halteeinrichtung den Kabelanfang umschliesst, schützt sie den Kabelanfang gleichzeitig vor Deformationen, die beim Handhaben oder Transportieren des Kabelaufnahmemoduls geschehen könnten und die die Übergabe an die Kabelbearbeitungsmaschine erschweren würden.

Gemäss eine Ausführungsform kann die Halteeinrichtung wenigstens zwei einander gegenüberliegende Haltebacken zum klemmenden Festhalten des Kabels umfassen, wobei vorzugsweise wenigstens einer der Haltebacken zum Aufbringen der Klemmkraft federbeaufschlagt ist. Dank der Feder ergibt sich eine ausreichend starke Klemmung des Kabels zum Erstellen der gewünschten Klemmkraft. Wenn das Kabelanschlussmodul in Bezug auf ein durch die Kabellängsrichtung vorgegebenes vorderes oder rückseitiges Ende aufweist, kann oder können für ein zuverlässiges Festhalten des Kabels auf einer Seite und besonders bevorzugt sowohl im Bereich der Vorderseite als auch im Bereich der dieser gegenüberliegenden Rückseite (d.h. die Seite des rückseitigen Endes) je zwei einander gegenüberliegende Haltebacken angeordnet sein. Nochmals bevorzugt können auf den genannten beiden Seiten des Kabelanschlussmoduls je zwei einander gegenüberliegende Haltebacken angeordnet sein. Somit ergibt sich je Seite gewissermassen eine Doppel-Haltebacken-Anordnung. Die hier erwähnte Vorderseite und Rückseite beziehen sich dabei auf die Längsmittelachse x, die zugleich der Kabellängsachse entspricht; wenn angeschlossen, dann entspricht diese auch der Maschinenlängsachse. Vorne bedeutet dabei der Kabelbearbeitungsmaschine mit den Bearbeitungsstationen zugewandt, oder der Richtung, in welche das freie Ende des Kabels zeigt; die Rückseite ist entsprechend die der Kabelmaschine abgewandte Seite bzw. die Gegenrichtung zur Seite mit dem freien Ende des Kabels.

Eine vorteilhafte Ausführungsform ergibt sich, wenn in das Kabelanschlussmodul eine Kabelrichteinheit integriert ist. Dadurch wird erreicht, so dass kein Richtapparate auf der Kabelbearbeitungsmaschine montiert sein müssen oder dass die Kabelbearbeitungsmaschine je nach Kabelmaterial umgebaut werden muss. Die Richtfunktion wird somit nicht durch eine maschinenseitige Einrichtung, sondern von einem externen, an die Kabelbearbeitungsmaschine jedoch andockbaren mobilen Einheit wahrgenommen.

Bevorzugt kann das Kabelanschlussmodul zum Richten des Kabels und zum Bilden der Kabelrichteinheit zwei Rollengruppen aufweisen, wobei jede Rollengruppe jeweils über eine und vorzugsweise mehrere Richtrollen verfügt, wobei das Kabel in einer Transportrichtung alternierend jeweils zwischen den Richtrollen der beiden Rollengruppen durchführbar ist. Die genannte Transportrichtung entspricht, wenn das Kabelanschlussmodul angeschlossen ist, in der Regel der Maschinenlängsachse. Mit einer Zustelleinrichtung kann die erste Rollengruppe in einer Schliessrichtung gegen die zweite Rollengruppe verschiebbar sein (Zustellbewegung). Die Zustelleinrichtung kann dabei der Kabelbearbeitungsmaschine zugeordnet sein. Es ist allerdings auch vorstellbar, die Zustelleinrichtung im Kabelanschlussmodul zu integrieren, sodass die Kabelrichteinheit gewissermassen autonom betrieben werden könnte.

Eine der Rollengruppen wird zunächst ausgehend von einer Offenstellung in eine Schliessrichtung, die rechtwinklig zur Transportrichtung des Kabels verläuft, gegen die gegenüberliegende Rollengruppe in einer Schliessstellung verschoben. In dieser Schliessstellung befinden sich die parallel zueinander verlaufenden Richtrollen der beiden Rollengruppe am Kabel und berühren dieses. Dieser Vorgang ist dem Fachmann auch unter der Bezeichnung «Zustellen» bekannt und geläufig. Der Abstand zwischen den Rollen kann dabei manuell eingestellt werden. Die Einstellung des Rollenabstands kann alternativ auch automatisch erfolgen.

Die Kabelrichteinheit des Kabelanschlussmoduls kann zwei Rollensupporte für die beiden Rollengruppen umfassen, an welchen Rollensupporten die jeweiligen Richtrollen der jeweiligen Rollengruppe frei drehbar befestigt sind. Weiter kann ein Kabelmodulgestell zum Tragen der beiden Rollensupporte vorgesehen sein, wobei vorzugsweise nur einer der Rollensupporte in einer Schliessrichtung verschiebbar im Kabelmodulgestell gelagert ist. Das Kabelanschlussmodul kann über wenigstens einen der Rollensupporte und/oder über das Kabelmodulgestell mit der Kabelbearbeitungsmaschine lösbar verbunden oder verbindbar sein. Zum Beispiel kann einerseits einer der Rollensupporte mit Anschlussmitteln und andererseits das Kabelmodulgestell mit Anschlussmitteln für die Verbindung zur Kabelbearbeitungsmaschine versehen sein. Es ist aber auch vorstellbar, dass das Kabelanschlussmodul über das Kabelmodulgestell mit der Kabelbearbeitungsmaschine lösbar verbunden oder verbindbar ist. Ein besonders optimaler Anschluss ergibt sich, wenn das Kabelanschlussmodul über die Rollensupporte der Kabelrichteinheit mit der Kabelbearbeitungsmaschine lösbar verbunden oder verbindbar ist. Zum Anschliessen des Kabelanschlussmoduls an die Kabelbearbeitungsmaschine können folglich die Anschlussmittel in den Rollensupporten vorgesehen sein. Anschlussmittel können zum Beispiel Öffnungen sein, über welche Öffnungen das Kabelanschlussmodul in korrespondierende Aufnahmedorne der Kabelbearbeitungsmaschine einsetzbar ist. Auch eine umgekehrte Anschlusslösung, d.h. Öffnungen in der Kabelbearbeitungsmaschine und Aufnahmedorne im Kabelanschlussmodul, ist selbstverständlich denkbar.

Das Kabelaufnahmemodul mit der Halteeinrichtung kann das Kabel fixieren oder hemmen, damit die Kabelspitze nicht ungewollt seine Position verlässt. Damit wird das Kabel in des Kabelaufnahmemoduls auf vorteilhafte Weise festgehalten und kann gestreckt bleiben. Die gestreckte Lage des Kabels trägt dazu bei, dass das Kabel beim Zusammenfahren der Rollensupporte bzw. beim Zustellen definiert zwischen die Richtrollen zu liegen kommt und den Richtrollen nicht ausweicht.

Eine alternative Ausführungsform betrifft eine Kabelrichteinheit mit zwei Rollensupporten für die beide Rollengruppen, in welchen die jeweiligen Richtrollen der jeweiligen Rollengruppe lose gehalten sind (also nicht fix über ein Lager zum Vorgeben der Drehbarkeit im Support befestigt). Die frei drehbare Lagerung der Richtrollen ergibt sich dadurch, dass von aussen (also von der Maschine her) zum Beispiel Achselemente in Lagerbuchsen der Richtrollen einführbar sind und so das Lager für die nun um die Achselemente frei drehbaren Richtrollen erstellt ist.

Weiterhin kann es vor allem im Hinblick auf die Effizient vorteilhaft sein, wenn das Kabelanschlussmodul dazu ausgelegt ist, dass, nachdem das Kabelanschlussmodul an die Kabelbearbeitungsmaschine der Anordnung angeschlossen ist, die Halteeinrichtung beispielsweise mit den wenigstens zwei einander gegenüberliegenden Haltebacken derart mit der Kabelrichteinheit in einer Wirkverbindung stehen, dass beim Zustellen der Kabelrichteinheit die klemmende Beaufschlagung des Kabels durch die Haltebacken oder andere Mittel der Halteeinrichtung aufgehoben wird oder aufhebbar ist.

Das Kabelanschlussmodul kann mit einem Blockierelement beispielsweise in Form einer Blockiernase ausgerüstet sein, mittels welchem für den Transport des Kabelanschlussmoduls verhindert wird, dass die Rollensupporte unbeabsichtigt zusammendrückt werden können.

Die Rollensupporte können mittels einer Federanordnung umfassend beispielsweise eine oder bevorzugt zwei Schraubendruckfedern zum Erzeugen einer Vorspannkraft für die Kabelrichteinheit in einer Offenstellung miteinander in Wirkverbindung stehen. Zum Richten des Kabels werden die Rollensupporte in einer Zustellbewegung aufeinander zu bewegt. Als Zustellen oder Schliessen Kabelrichteinheit wird die Relativbewegung bezeichnet, die dazu führt, dass der Abstand zwischen den Rollensupporten verkleinert wird.

Anstelle von Schraubendruckfedern sind aber auch andere Lösungen zum Erzeugen der Vorspannkraft in der Offenstellung zwischen den Rollensupporten denkbar. Gemäss einer alternativen Ausführungsform können die Rollensupporte der Kabelrichteinheit über eine Federanordnung miteinander verbunden und einstückig ausgebildet sein, wobei die Federanordnung bevorzugt flächig ausgestaltet ist und zusammen mit den Rollensupporten aus einem gemeinsamen Blech hergestellt werden kann. Die Federanordnung kann durch ein gelasertes Stahlblech hergestellt sein. Die Federanordnung kann eine schlangenförmige oder maänderartige Struktur aufweisen. Die Rollensupporte werden somit durch ein gemeinsames Bauteil gebildet, wobei die erforderliche Flexibilität und Bewegbarkeit zwischen den Rollensupporten durch die obige Federanordnung in Form der flächigen Federanordnung (auch bekannt als sog. Flachfeder) erzielt wird. Die erwähnte Variante mit den die einstückig über eine Federanordnung miteinander verbundenen Rollensupporte könnte auch für konventionelle mit Richtapparaten ausgerüstete Kabelbearbeitungsmaschinen vorteilhaft sein.

Zum Erleichtern des Einfädel- und/oder Ausfädelvorgangs können Antriebsrollen eingesetzt werden, mit welchen eine Vorwärts- und/oder Rückwärtsbewegung des Kabels in Transportrichtung ermöglicht wird. Zwei Antriebsrollen können einander gegenüberliegend angeordnet sein und ein Antriebsrollen-Paar bilden.

Das Kabelanschlussmodul kann für ein Paar von Antriebsrollen der Kabelbearbeitungsmaschine laterale, in einem Kabelmodulgestell angeordnete Rolleneinführöffnungen aufweisen, über die, wenn erforderlich, die Antriebsrollen in radialer Richtung des Kabels zum Erstellen einer Wirkverbindung zum vorwärts- und/oder rückwärts gerichteten Antreiben des Kabels einfahrbar sind.

Besonders bevorzugt können die Rolleneinführöffnungen je Seite bevorzugt jeweils zwischen zwei Haltebacken angeordnet sein.

Die Vorwärtsbewegung des Kabels dient dabei zum Einfädeln; die Rückwärtsbewegung des Kabels dient dabei zum Ausfädeln.

Das Kabelaufnahmemodul kann eine Kabelantriebsfunktion enthalten, welche das Kabel vor- und rückwärts entlang seiner Achse bzw. in Richtung der Maschinenlängsachse bewegt. Dadurch würde der Fördereinheit auf der Kabelbearbeitungsmaschine unterstützt oder könnte ganz entfallen. Beispielsweise kann dies umgesetzt werden, indem Richtrollen mit eigenen Motoren versehen sind oder indem die Richtrollen mechanisch an Antriebe der Kabelbearbeitungsmaschine gekoppelt werden. Die mechanische oder elektrische Energie kann dabei über geeignete Schnittstellen (Antriebswellen, elektrische Kontakte) übertragen werden.

Das Kabelanschlussmodul kann weiter dazu ausgelegt sein, dass es vor dem Anschliessen, mit einem Kabelgebinde verbunden werden kann, so dass das Kabelanschlussmodul mit dem Kabelgebinde gelagert und transportiert werden kann. Das Kabelaufnahmemodul kann somit beim Gebinde deponiert werden. So kann weiter sichergestellt werden, dass das Kabelaufnahmemodul am zugehörigen Kabelgebinde bis zum Einsatz befestigt bleibt, und damit das Kabelaufnahmemodul mit dem Kabelanfang einerseits und das Kabelgebinde andererseits bei Lagerung und Transport zusammenbleiben.

Das Kabelanschlussmodul kann mit einer maschinenlesbaren Kennung ausgerüstet sein, so dass mittels eines Lesegeräts vor, beim oder nach dem Anschliessen die Anordnung im Hinblick auf eine optimalen und nachverfolgbaren Konfektionierprozess erkennen kann, um was für ein Kabel es sich genau handelt. Diese Ausgestaltung löst den Nachteil des üblichen Vorgehens von konventionellen Konfektionieranordnungen, das darin besteht, dass die Zuordnung vom Kabelgebinde zur Maschine nicht maschinell erkennbar ist, d.h. die Maschine nicht selbst erkennen kann, ob das korrekte Kabelmaterial eingespannt ist.

Ein weiterer Aspekt der Erfindung betrifft eine Anordnung zum Konfektionieren von Kabeln mit einer Kabelbearbeitungsmaschine mit wenigstens einer und vorzugsweise mehreren Bearbeitungsstationen und einer beispielsweise einen Kabelgreifer umfassenden Zuführeinheit zum Zuführen eines Kabelendes des Kabels zu einer der Bearbeitungsstationen. Dadurch, dass die Kabelbearbeitungsmaschine eine Befestigungseinrichtung aufweist, über welche zum Anschliessen des Kabels an die Kabelbearbeitungsmaschine ein ein Kabel haltendes mobiles Kabelanschlussmodul, insbesondere das Kabelanschlussmodul gemäss der vorgängigen Beschreibung, lösbar befestigbar oder befestigt ist, ergeben sich eine Reihe von Vorteilen. Es wird eine gegenüber dem Stand der Technik verbesserte oder alternative Anordnung geschaffen, mit der effizient und auf effektive Weise ein Kabelwechsel bei einer Kabelbearbeitungsmaschine durchgeführt werden kann. Dank des mobilen multifunktionalen Kabelanschlussmoduls kann die Kabelbearbeitungsmaschine einfacher, sicher und kostengünstig ausgeführt werden. Das mobile Kabelanschlussmodul vereinfacht insbesondere das das Einfädeln des Kabels in die Kabelbearbeitungsmaschine massiv. Da das Kabelanschlussmodul auch nach einem Kabelwechsel am Kabel verbleibt, kann es bei Bedarf ohne Weiteres wieder verwendet werden und das aufwendige Einfädeln muss nicht jedes Mal wiederholt werden.

Die Anordnung zum Konfektionieren von Kabeln kann eine Art Bausatz sein und somit aus einer Kabelbearbeitungsmaschine mit wenigstens einer und vorzugsweise mehreren Bearbeitungsstationen und aus einem mobilen Kabelanschlussmodul für diese Anordnung bestehen, wobei das Kabelanschlussmodul eine Halteeinrichtung umfasst, mittels welcher das Kabelanschlussmodul an ein Kabel anbringbar ist und dass das Kabelanschlussmodul derart ausgestaltet ist, dass es zusammen mit dem Kabel an eine Kabelbearbeitungsmaschine der Anordnung anschliessbar oder angeschlossen ist.

Die Kabelbearbeitungsmaschine kann eine der Zuführeinheit vorgelagerten Fördereinheit zum Transport des Kabels zur Zuführeinheit aufweisen. Diese Fördereinheit umfassend beispielsweise gegenläufig bewegbare Fördermittel, wobei, wenn wenigstens eines der Fördermittel angetrieben wird, das Kabel zwischen den Fördermitteln durch Reibschluss förderbar ist, kann zum Beispiel auf an sich bekannte Weise als Bandantrieb ausgestaltet sein.

Das mobile Kabelaufnahmemodul kann weitere Bearbeitungsvorrichtungen enthalten, z.B. Quetschrollen, Schmutzabstreifer oder Kabelbremsen. Das Kabelaufnahmemodul kann weiter Qualitätsüberwachungen (z.B. eine Spliceüberwachung oder Knotendetektion) beinhalten. Das Kabelaufnahmemodul kann zu diesem Zwecke geeignete elektrische oder mechanische Schnittstellen aufweisen (beispielsweise elektrische oder mechanische Kontaktflächen oder elektrische Buchsen). Das Kabelaufnahmemodul kann über diese Schnittstellen mit der Kabelbearbeitungsmaschine oder beispielsweise eine Rüstvorrichtung verbunden werden.

Weiter kann die Anordnung eine Kabelvorbehandlungsstation mit einer Kabelrichteinheit umfassen, wobei die Kabelrichteinheit dem Kabelanschlussmodul zugordnet ist und dadurch mobil ausgestaltet ist. Folglich ist das Kabelanschlussmodul mit der Kabelrichteinheit zusammen mit dem Kabel an die die Kabelbearbeitungsmaschine anschliessbar. Es braucht somit keine komplizierte Kabelbearbeitungsmaschine mit je nach Kabelmaterial unterschiedlichen Richt- und Führungsvorrichtungen. Auch ein Umbau wie bei konventionellen Kabelbearbeitungsmaschine bei einem Kabelwechsel auf anderes Material wird unnötig.

Die Kabelvorbehandlungsstation mit der Kabelrichteinheit kann dabei bevorzugt der Fördereinheit vorgelagert angeordnet sein.

Die Kabelbearbeitungsmaschine kann eine Anschlussplattform für mehrere Kabelanschlussmodule zum wahlweisen Bearbeiten eines Kabels aus einem der Kabelanschlussmodule aufweisen, wobei die Anschlussplattform derart mittels eines Verstellmechanismus bewegbar ist, dass die Kabelanschlussmodule zwischen einer Arbeitsstellung und einer Parkstellung verstellbar sind.

In einer bevorzugten Ausführungsform kann die Anschlussplattform lateral bzw. quer und bevorzugt rechtwinklig zur Maschinenlängsachse auf einem Maschinengestell verschiebbar gelagert sein. Es wäre alternativ auch denkbar, die Anschlussplattform schwenkbar auszugestalten.

Die Kabelbearbeitungsmaschine kann mittels eines Antriebs antreibbare Antriebsrollen umfassen, wobei die Antriebsrollen dazu ausgestaltet sind, das zwischen zwei Antriebsrollen eingeklemmte Kabel zu fördern. Weiter kann eine Rollenverfahreinrichtung vorgesehen sein, mit der die Antriebsrollen zum Aufbringen einer Presskraft auf das Kabel relativ zueinander verfahrbar sind. Die Antriebsrollen können in einer Offenstellung soweit voneinander beabstandet oder sonstwie positioniert sein, dass das Kabelanschlussmodul beim Anschliessen zwischen den paarweise zusammengefassten Antriebsrollen an die Kabelbearbeitungsmaschine anordenbar und befestigbar ist und dass die Antriebsrollen von der Offenstellung in eine Aktivstellung verfahrbar und in das Kabelanschlussmodul einfahrbar sind, dass sie das im Kabelanschlussmodul befindliche Kabel in der Aktivstellung klemmend kontaktieren und so die Kabelförderung im Hinblick auf das Einfädeln und/oder Ausfädeln ermöglichen.

Mit der erfindungsgemässen Anordnung und insbesondere dank der Antriebsrollen wird erreicht, dass es praktisch nicht passieren kann, dass das Kabel beim Ausfädeln aus der Kabelbearbeitungsmaschine eine unerwünschte Schlaufe bilden.

Die Kabelbearbeitungsmaschine können zum Bilden eines vorderen und eines hinteren Antriebsrollenpaars jeweils zwei Antriebsrollen umfassen, wobei die Antriebsrollen des vorderen Antriebsrollenpaars zum Einfädeln des Kabels in die Kabelbearbeitungsmaschine dienen und die Antriebsrollen des hinteren Antriebsrollenpaars zum Ausfädeln des Kabels aus der Kabelbearbeitungsmaschine vorgesehen sind.

Die Antriebsrollen können in oder über die bereits erwähnten lateralen Rolleneinführöffnungen des angeschlossenen Kabelanschlussmoduls zum Erstellen einer Wirkverbindung zum vorwärts- und/oder rückwärts gerichteten Antreiben des Kabels einfahrbar sein.

Die Kabelbearbeitungsmaschine, insbesondere falls vorhanden die Anschlussplattform der Kabelbearbeitungsmaschine, kann Aufnahmedorne zum Vorgeben eines Steckplatzes für jeweils ein Kabelanschlussmodul aufweisen, auf welche Aufnahmedorne zum Befestigen bzw. Anschliessen das Kabelanschlussmodul über zu den Dornen korrespondierende Öffnungen in die Kabelbearbeitungsmaschine ein- oder aufsetzbar ist. Anstelle der Dorne und der Öffnungen sind auch Verbindungsmittel wie etwa andere formschlüssige Verbindungen denkbar. Auch ein Reibschluss kommt in Frage. Die Aufnahmedorne können bewegbar ausgeführt sein, wodurch ermöglicht wird, dass bei in dem Kabelanschlussmodul integriertem Richteinheit die Zustellbewegung der Kabelrichteinheit über die Aufnahmedorne erfolgen kann.

Die Anordnung kann eine Leseeinrichtung umfassen, die ausgestaltet ist, die ein von einem Kabelanschlussmodul gehaltenes Kabel betreffende Daten zu erfassen. Insbesondere kann die Leseeinrichtung als Lesegeräts dazu ausgestaltet sein, die maschinenlesbaren Kennung des Kabelanschlussmoduls zu erkennen.

Weiter betrifft die Erfindung ein Verfahren zum Anschliessen eines Kabels an eine Anordnung zum Konfektionieren von Kabeln. Dabei kann die Anordnung wenigstens eine Bearbeitungsstation und eine beispielsweise einen Kabelgreifer umfassende Zuführeinheit zum Zuführen eines Kabelendes des Kabels zur wenigstens einen Bearbeitungsstationen enthalten. Diese Anordnung kann vorzugsweise die vorgängig beschriebene Anordnung sein. Das Verfahren zeichnet sich durch folgende Schritte aus:
- Anbringen eines mobilen Kabelanschlussmoduls an ein Kabel im Bereich des Kabelendes,
- Transferieren des Kabelendes mit dem daran angebrachten Kabelanschlussmodul zur Anordnung und Befestigen des Kabelanschlussmoduls an eine Kabelbearbeitungsmaschine der Anordnung, wodurch das Kabel angeschlossen ist.

Das Anbringen kann an einem beliebigen Ort, beispielsweise schon beim Kabelliferanten, stattfinden. Von diesem Ort kann der Schritt Transportieren des Kabels mit dem daran angebrachten Kabelanschlussmodul vor dem Transferieren durchgeführt werden.

Nach dem Anschliessen das Kabelanschlussmodul sich in einer Parkstellung oder bereits in einer Arbeitsstellung befinden.

Das Transferieren erfolgt vorzugsweise dabei manuell oder automatisiert unter Verwendung eines Roboters oder einer anderen Transfereinrichtung.

Vorteilhaft kann es sein, wenn zum Erstellen des Versatzes der oder die Drehkabelgreifer der Kabelausrichteinrichtung in vertikaler Richtung verschoben wird oder werden. Alternativ sind auch andere Bewegungsrichtungen zum Verschieben der Drehkabelgreifer denkbar. Zum Beispiel kann wenigstens einer der Drehkabelgreifer zum Erstellen des Versatzes in diagonaler Richtung verschoben werden.

Besonders vorteilhaft kann es sein, wenn zum Transport und Transferieren oder bis zum Anschliessen das Kabel derart in Kabelanschlussmodul gehalten ist, dass es aus dem Kabelanschlussmodul hinausragt. Das Einfädeln des Kabels kann auf diese Weise nochmals vereinfacht werden.

Ein besonders vorteilhaftes Verfahren ergibt sich, wenn zum Transport und Transferieren das Kabel derart im Kabelanschlussmodul gehalten ist, welches Kabelanschlussmodul Richtrollen umfasst, dass es von den Richtrollen unbeaufschlagt ist und dass das Kabel erst nach dem Anschliessen von den Richtrollen des Kabelanschlussmoduls zum Richten des Kabels beaufschlagt wird.

Weitere Einzelmerkmale und Vorteile der Erfindung ergeben sich aus der nachfolgenden Beschreibung von Ausführungsbeispielen und aus den Zeichnungen. Es zeigen:
- Figur 1: eine schematische Darstellung erfindungsgemässen Anordnung zum Konfektionieren von Kabeln mit einer Kabelbearbeitungsmaschine und einem daran angeschlossenen Kabelanschlussmodul,
- Figur 2: ein mobiler Kabelanschlussmodul zum Anschliessen an eine Kabelbearbeitungsmaschine einer Anordnung zum Konfektionieren von Kabeln mit einer Anschlussplattform,
- Figur 3: einer Kabelbearbeitungsmaschine einer Anordnung zum Konfektionieren von Kabeln mit einer Anschlussplattform,
- Figur 4: die Kabelbearbeitungsmaschine aus Fig. 3 in einer etwas verkleinerten Darstellung, wobei auf der Kabelbearbeitungsmaschine ein Kabelanschlussmodul angeschlossen ist,
- Figur 5: die Kabelbearbeitungsmaschine mit zwei auf der Anschlussplattform platzierten Kabelanschlussmodulen,
- Figur 6: die Kabelbearbeitungsmaschine nach einem Kabelwechsel, bei dem die Anschlussplattform verschoben wurde
- Figur 7: ein an eine Kabelbearbeitungsmaschine angeschlossenes Kabelanschlussmodul vor einem Einfädelvorgang,
- Figur 8: das Kabelanschlussmodul aus Fig. 5 während dem Einfädeln,
- Figur 9: ein an eine Kabelbearbeitungsmaschine angeschlossenes Kabelanschlussmodul vor einem Ausfädelvorgang,
- Figur 10: das Kabelanschlussmodul aus Fig. 5 während dem Ausfädeln,
- Figur 11: eine Draufsicht auf ein weiteres mobiles Kabelanschlussmodul,
- Figur 12: eine Kabelbearbeitungsmaschine einer Anordnung zum Konfektionieren von Kabeln gemäss einem weiteren Ausführungsbeispiel,
- Figur 13: die Kabelbearbeitungsmaschine aus Fig. 12 mit daran angeschlossenem Kabelanschlussmodul,
- Figur 14: ein mobiles Kabelanschlussmodul mit einer manuell betätigbaren Kabelrichteinheit in einer Schliessstellung,
- Figur 15: ein alternatives mobiles Kabelanschlussmodul mit einer Kabelrichteinheit in einer Offenstellung,
- Figur 16: das mobile Kabelanschlussmodul aus Fig. 15 mit der Kabelrichteinheit in Schliessstellung,
- Figur 17: ein mobiles Kabelanschlussmodul mit einer geöffneten Halteeinrichtung in einer vergrösserten Querschnittsdarstellung,
- Figur 18: das mobile Kabelanschlussmodul aus Fig. 15 mit der geschlossenen Halteeinrichtung,
- Figur 19: das mobile Kabelanschlussmodul aus Fig. 15 mit einem in die geschlossene Halteeinrichtung teilweise eingefahrenen Löseelement zum Aufheben der klemmenden Beaufschlagung des Kabels durch die Halteeinrichtung,
- Figur 20: eine Variante des in Fig. 15 gezeigten mobile Kabelanschlussmoduls mit einer geschlossenen Halteeinrichtung und einem für den Transport blockierten Rollensupport der Kabelrichteinheit,
- Figur 21: das mobile Kabelanschlussmodul aus Fig. 20 mit der Kabelrichteinheit nach einem Zustellvorgang (Kabelrichteinheit in Schliessstellung ),
- Figur 22: eine schematische Darstellung eine Kabelgebindes mit einem Kabelanschlussmodul, die zusammen eine an eine Kabelbearbeitungsmaschine anschliessbare mobile Einheit bilden,
- Figur 23: eine perspektivische Darstellung eines mobilen Kabelanschlussmoduls gemäss einem weiteren Ausführungsbeispiel,
- Figur 24: eine perspektivische Darstellung des mobilen Kabelanschlussmoduls aus Fig. 23, jedoch aus einem anderen Blickwinkel,
- Figur 25: eine alternative Ausgestaltung eines mobilen Kabelanschlussmoduls in einer perspektivischen Darstellung,
- Figur 26: das Kabelanschlussmodul aus Fig. 25 mit in Lagerbuchsen der Richtrollen eingeführten Achselementen in einer Querschnittsdarstellung,
- Figur 27: eine stark schematisierte Darstellung einer Anordnung zum Konfektionieren von Kabeln mit einer Kabelbearbeitungsmaschine und einem mobilen Kabelanschlussmodul, und
- Figur 28: eine alternative Ausgestaltung der Anordnung von Fig. 27.

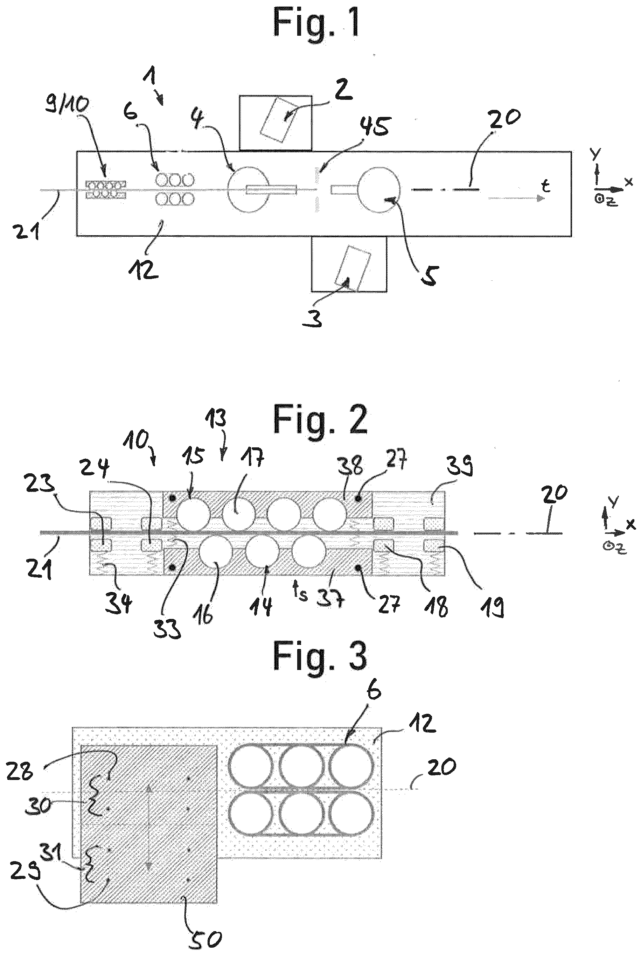

Figur 1 zeigt eine Anordnung mit einer mit 1 bezeichneten Kabelbearbeitungsmaschine. Die Kabelbearbeitungsmaschine 1 umfasst mit eine als Bandförderer ausgestaltete Fördereinheit 6, welche das Kabel 21 entlang der Maschinenlängsachse 20 in durch den Pfeile t angedeutete Transportrichtung zur als Schwenkeinheit ausgestalten Zuführeinheit 4 bringt. Das Kabel ist in der Regel ein elektrisches Kabel enthaltend zum Beispiel einen Vollleiter aus Kupfer oder Stahl oder Drahtlitzen und einer Isolation als Ummantelung für die Leiter. Die um eine vertikale Achse drehbare Schwenkeinheit 2 verfügt über einen Greifer zum Halten des Kabels 21. Eine Abisolierstation 45 zum Ablängen und Abisolieren des Kabels ist ersichtlicherweise auf der jeweiligen Maschinenlängsachse 20 angeordnet. Die Bearbeitungsstationen 2 und 3 sind hingegen neben der Maschinenlängsachse 20 angeordnet. In Fig. 1 ist je Seite lediglich jeweils eine Bearbeitungsstation der Einfachheit halber dargestellt; häufig weist Kabelbearbeitungsmaschine 1 jedoch mehrere Bearbeitungsstationen je Seite auf.
Bei den Bearbeitungsstationen 2, 3 kann es sich um Tüllenstationen und/oder Crimpstationen handeln. Eine Crimpstation kann dabei eine Crimppresse zum Verbinden eines Kabelendes mit einem Crimpkontakt aufweisen. Die Bearbeitungsstation(en) 2 sind dem vorauseilenden Kabelende zugeordnet; die Bearbeitungsstation(en) 3 dienen zur Konfektionierung der nacheilenden Kabelenden. Hinsichtlich des Aufbaus und der Wirkungsweise einer Kabelbearbeitungsmaschine mit Crimppressen wird beispielhaft auf die EP 1 341 269 A1 verwiesen. Zusätzlich oder alternativ wären als Bearbeitungsstationen auch Bestückungsstationen zum Bestücken von Kabelenden mit Steckergehäusen vorstellbar. Da es vorliegend um die Bearbeitung des vorauseilenden Kabelendes geht, wird nachfolgend nur noch auf die Fördereinheit 6, gegebenenfalls die Zuführeinheit 4 und weiter gegebenenfalls die Bearbeitungsstation(en) 2 Bezug genommen.

Die Anordnung mit der Kabelbearbeitungsmaschine 1 weist weiter eine vor der Fördereinheit 6 angeordnete Kabelvorbehandlungsstation auf. Diese Kabelvorbehandlungsstation besteht vorliegend im Wesentlichen aus einer Kabelrichteinheit 13, die von der Kabelbearbeitungsmaschine 1 entfernt werden kann. Die Kabelrichteinheit 13 ist auf die nachfolgend im Detail erläuterte Weise mobil ausgestaltet und an die Kabelbearbeitungsmaschine 1 anschliessbar. Diese mobile Einheit wird nachfolgend als Kabelanschlussmodul 10 bezeichnet. Vorliegend weist wie bereits erwähnt das Kabelanschlussmodul 10 eine Kabelrichteinheit 13 auf. Für bestimmte Anwendungen, beispielsweise wenn Kabel verwendet werden, die ausreichend gerade sind oder bereits vorbehandelt bereit gestellt werden, sind unter Umständen mobile Kabelanschlussmodule 10 ohne Kabelrichteinheit denkbar.

Das in Figur 1 sowie in nachfolgenden Figuren gezeigte kartesische Koordinatensystem mit den Achsen x-y-z dient als Hilfestellung für das Verständnis der Richtungen und der Hauptbewegungen der Komponenten der Anordnung zum Konfektionieren von Kabeln mit der Kabelbearbeitungsmaschine 1 und dem Kabelanschlussmodul 10.

Figur 2 zeigt ein mobiles Kabelanschlussmodul 10, das an die Kabelbearbeitungsmaschine 1 werden kann. Das Kabelanschlussmodul 10 umfasst eine Halteeinrichtung, mittels welcher das Kabelanschlussmodul 10 an das Kabel 21 angebracht werden kann. Diese Halteeinrichtung umfasst im vorliegenden Ausführungsbeispiel vier Paare von Haltebacken, wobei jedes Paar jeweils zwei einander gegenüberliegende Haltebacken aufweist. Das Kabelanschlussmoduls weist ersichtlicherweise ein durch die Kabellängsrichtung bzw. -achse x vorgegebenes vorderes oder rückseitiges Ende auf. Je zwei einander gegenüberliegende Haltebacken 18 und 19 sind jeweils im Bereich der Vorderseite angeordnet; je zwei einander gegenüberliegende Haltebacken 23, 24 sind jeweils im Bereich der Vorderseite angeordnet. Die zwei einander gegenüberliegende Haltebacken 18, 19, 23, 24 dienen zum klemmenden Festhalten des Kabels 21, wobei zum Aufbringen der Klemmkraft einer der Haltebacken 18, 19, 23, 24 federbeaufschlagt ist. Die entsprechenden Federn beispielhaft in Form von Schraubendruckfedern sind mit 34 bezeichnet. Das Kabelanschlussmodul 10 kann mittels der Halteeinrichtung an den Kabelanfang des Kabels 21 angebracht werden und so zur Kabelbearbeitungsmaschine gebracht werden. Die Halteeinrichtung mit den Haltebacken 18, 19, 23, 24 ermöglicht eine wenigstens temporär feste Verbindung zwischen Kabelanschlussmodul und Kabel zum Schaffen einer mobilen, einfach handhabbaren Einheit, die manuell oder von einem Roboter oder einer anderen Transfereinrichtung erfasst und zur Kabelbearbeitungsmaschine 1 gebracht werden kann.

Die ein integraler Bestandteil des Kabelanschlussmoduls 10 bildende Kabelrichteinheit 13 zum Richten des Kabels 21 weist zwei Rollengruppen aufweist, wobei jede Rollengruppe jeweils über mehrere Richtrollen 16 , 17 verfügt, wobei das Kabel 21 in einer Transportrichtung x alternierend jeweils zwischen den Richtrollen 16, 17 der beiden Rollengruppen 14, 15 durchführbar ist. Die Kabelrichteinheit 13 weist zwei Rollensupporte 37, 38 für die beiden Rollengruppen 14, 15 auf, an welchen die jeweiligen Richtrollen 16, 17 der jeweiligen Rollengruppe frei drehbar befestigt sind. Die Kabelrichteinheit 13 weist weiter ein Kabelmodulgestell 39 zum Tragen der beiden Rollensupporte 37, 38, wobei einer der Rollensupporte 37 in einer durch den Pfeil s angedeuteten Schliessrichtung verschiebbar im Kabelmodulgestell 39 gelagert ist.

Die Richtrollen 16 einerseits und die Richtrollen 17 andererseits verlaufen parallel zueinander und liegen jeweils auf horizontalen Rollenlinien. Das Kabel 21, das zwischen den Rollen 16 und den Rollen 17 zum Richten durchführbar ist, verläuft ebenfalls in horizontaler Richtung x. In einer Offenstellung sind die beiden Rollengruppen 14, 15 soweit voneinander beabstandet, dass ein Kabel zwischen die Rollen 16 und Rollen 17 eingeführt oder eingelegt werden kann. Danach wird die Rollengruppe mit den Richtrollen 16 gegen die gegenüberliegende Rollengruppe bewegt. Die Schliessrichtung s verläuft rechtwinklig zur x-Achse, d.h. in Richtung der y-Achse. Nach Beendigung des Zustellvorgangs, nachdem die Rollengruppe 14 gegen andere Rollengruppe 15 in Schliessrichtung bewegt wurde, kann das nun alternierend von den Richtrollen 16, 17 beaufschlagte Kabel 21 in Transportrichtung durch die Richteinheit 13 des angeschlossenen Kabelanschlussmoduls 10 mittels der Fördereinheit 6 gezogen werden. Die beiden Rollengruppen sind, zumindest bei angeschlossenem Kabelanschlussmodul, nebeneinander angeordnet; die Schliessrichtung verläuft in diesem Fall auf einer horizontalen Ebene.

Die Richtrollen 16 der ersten Rollengruppe 14 sind frei drehbar an einem mit 37 bezeichneten Rollensupport befestigt. Die Richtrollen 17 der zweiten Rollengruppe 15 sind frei drehbar an einem Rollensupport 38 befestigt. Das Kabelanschlussmodul 10 umfasst weiter ein Modulgestell 39 in Form einer Grundplatte zum Tragen des ersten Rollensupports 37 und des zweiten Rollensupports 38. Die Rollensupporte 37, 38 sind vorliegend plattenartig ausgestaltet.

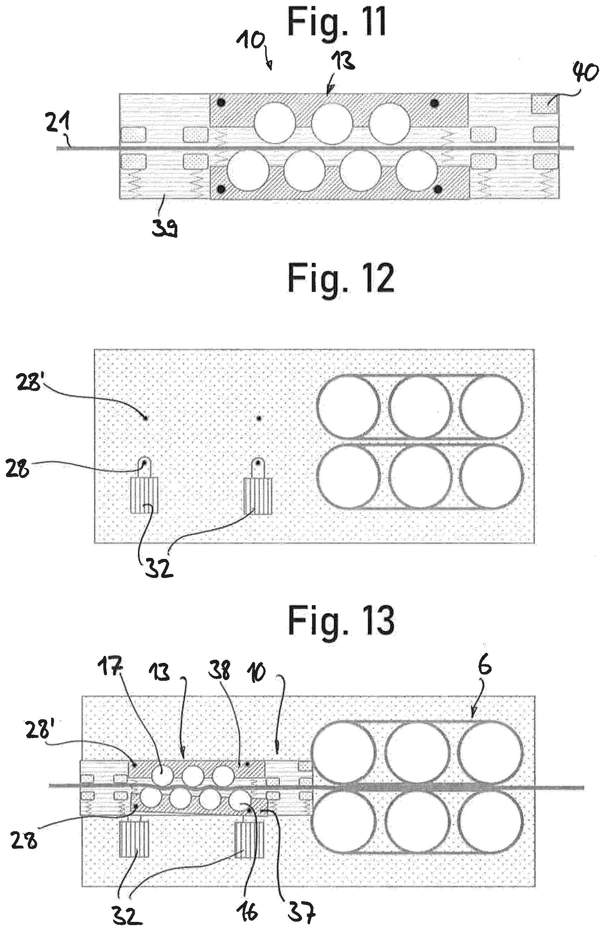

Neben der Verschiebbarkeit kann der Rollensupport 37 für die erste Rollengruppe 14 zusätzlich in Bezug auf eine vertikale, im rechten Winkel zur Transportrichtung verlaufende Schwenkachse (d.h. in Richtung der z-Achse) drehbar im Modulgestell 39 gelagert sein (vgl. z.B. nachfolgende Fig. 13). Der grundsätzliche Aufbau des Richteinheit 13 ähnelt dem aus der EP 2 399 856 A1 bekannt gewordenen Richtapparat.

Der Rollensupport 37 ist durch Federelemente 33 in Form von Schraubendruckfedern am Modulgestell 39 abgestützt, die den Rollensupport 37 mit einer Federkraft entgegen der Schliessrichtung s beaufschlägt.

Das mobile Kabelaufnahmemodul 10 kann neben der Halteeinrichtung, die das Kabel 21 festhält, und den Richtrollen 16, 17 noch weitere (hier nicht gezeigte) Vorrichtungen, welche für die Verarbeitung des Kabelmaterials erforderlich oder hilfreich sein können, wie Quetschrollen, Reinigungsvorrichtungen, Führungsteile, Mess- und Überwachungsvorrichtungen umfassen. Insbesondere kann es Führungsteile umfassen, welche für einen störungsfreien Kabeltransport sorgen.

Eine Besonderheit des hier gezeigten Kabelanschlussmoduls 10 besteht darin, dass die Anschlussmittel zum Anschliessen des Kabelanschlussmoduls 10 an die Kabelbearbeitungsmaschine 1 in den Rollensupporten 37, 38 vorgesehen sind. Die Anschlussmittel sind vorliegend beispielhaft Öffnungen 27, über welche das Kabelanschlussmodul 10 in korrespondierende Aufnahmedorne der Kabelbearbeitungsmaschine 1 einsetzbar ist. Diese Aufnahmedorne sind in Fig. 3 erkennbar und dort mit 28 und 29 bezeichnet.

Figur 3 zeigt einen Teil einer Kabelbearbeitungsmaschine 1 für eine Anordnung zum Konfektionieren von Kabeln. Von der Kabelbearbeitungsmaschine 1 sind das Maschinegestell 12 und die darauf angeordnete Fördereinheit 6 zum Transport des Kabels zur (hier nicht dargestellten) Zuführeinheit zu sehen. Auch diese Kabelbearbeitungsmaschine 1 kann - wie die anhand Fig. 1 erläuterte Kabelbearbeitungsmaschine - weiter wenigstens eine oder mehrere Bearbeitungsstationen umfassen. Auf der Kabelbearbeitungsmaschine 1 ist eine Anschlussplattform 50 vorgesehen, die lateral bzw. rechtwinklig zur Maschinenlängsachse 20, also in y-Richtung, auf dem Maschinegestell 12 verschiebbar gelagert ist. Die Verschiebbarkeit der Anschlussplattform 50 ist durch einen Doppelpfeil angedeutet.

Die Anschlussplattform 50 ist vorliegend als Plattform für zwei Kabelanschlussmodule zum wahlweisen Bearbeiten eines Kabels aus einem der Kabelanschlussmodule ausgestaltet. Anschlussmittel sind dabei Aufnahmedorne 28 und 29. Auf die vier Aufnahmedorne 28 ist ein erstes Kabelanschlussmodul aufsetzbar; auf die vier Aufnahmedorne 29 ist ein erstes Kabelanschlussmodul aufsetzbar. Die Gruppen von Aufnahmedorne 28, 29 bilden damit Steckplätze 30, 31 für Kabelanschlussmodule.

Wenn die Kabelbearbeitungsmaschine 1 das auf einem bestimmten Kabelaufnahmemodul 10 befindliche Kabel verarbeiten soll, wird dieses Kabelaufnahmemodul 10zur Kabelbearbeitungsmaschine 1 gebracht, beispielsweise in eine Parkstellung. Dies kann erfolgen, während die Kabelbearbeitungsmaschine mit einem vorherigen Kabel am Produzieren ist.

Die entlang der Maschinenlängsachse 20 bzw. in x-Richtung verlaufende Fördereineinheit 13 zum Transportieren des Kabels ist vorliegend als Bandförderer ausgestaltet. Zwischen den beiden Bändern kann das Kabel erfasst und transportiert werden. Die Fördereinheit 13 umfasst dazu gegenläufig bewegbare als Endlosbänder ausgestaltete Fördermittel, wobei, wenn wenigstens eines der Fördermittel angetrieben wird, das Kabel zwischen den Fördermitteln durch Reibschluss förderbar ist. Die Fördereineinheit 13 könnte grundsätzlich auch als Rollenantrieb ausgeführt sein.

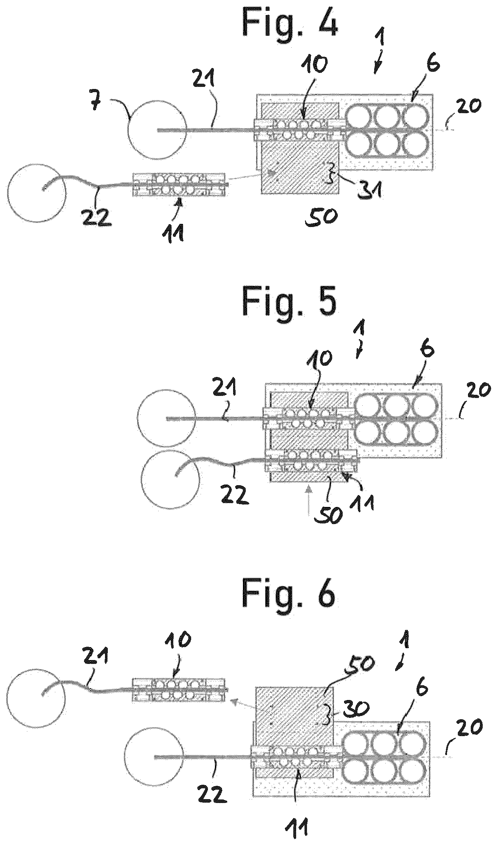

Die Wirkweise der Kabelbearbeitungsmaschine 1 mit der Anschlussplattform 50 für die zwei Kabelanschlussmodule zum wahlweisen Bearbeiten eines Kabels aus einem der Kabelanschlussmodule erschliesst sich anhand der Figuren 4 bis 5. Die Anschlussplattform 50 ist mittels eines Verstellmechanismus derart bewegbar, dass die Kabelanschlussmodule zwischen einer Arbeitsstellung und einer Parkstellung verstellbar sind. Figur 4 zeigt eine Kabelbearbeitungsmaschine 1 mit einem daran angeschlossenen mobilen Kabelanschlussmodul 10. Das Kabelanschlussmodul 10 befindet sich in einer Arbeitsstellung, von der aus Kabel in der Kabelbearbeitungsmaschine 1 konfektioniert werden können. Der zweite auf der Anschlussplattform 50 vorgegeben Steckplatz 31 befindet sich in einer Parkstellung und liegt frei. Im Hinblick auf einen Kabelwechsel kann auf diesen Steckplatz 31 ein zweites, mit 11 bezeichnets mobiles Kabelanschlussmodul (zusammen mit dem von ihm gehaltenen Kabel 22) gesetzt werden. Diese Konstellation ist in Figur 5 gezeigt. Dies kann erfolgen, während die Kabelbearbeitungsmaschine 1 mit einem vorherigen Kabel 21 noch am Produzieren ist. Nun wird, beispielsweise nachdem das Kabelgebinde mit dem Kabel 21 leer ist oder nachdem ein Ausfädelvorgang beim Kabelanschlussmodul 10 durchgeführt worden ist, die Anschlussplattform 50 verschoben, so dass der Steckplatz 31 mit dem dort angeschlossenen Kabelanschlussmodul 1 1 in der Arbeitsstellung befindet. Danach kann, wie in Figur 6 gezeigt wird, das Kabelanschlussmodul 10 von der Kabelbearbeitungsmaschine 1 entnommen und entfernt werden. Auf den nun frei gewordenen Steckplatz 30 kein ein nächstes, ein Kabel haltendes Kabelanschlussmodul gesetzt werden. Der Steckplatz 30 befindet sich in der Parkstellung.

Der Bediener kann das Anbringen des Kabelaufnahmemoduls in die Parkstellung der Maschine (Fig. 5) durch Betätigen einer Taste mitteilen oder die Kabelbearbeitungsmaschine 1 hat geeignete Sensoren, um festzustellen, dass sich ein Kabelaufnahmemodul 11 an der Parkstellung befindet, was vorteilhaft eine notwendige Vorbedingung für den nachfolgenden Wechsel sein kann.

Die Kabelbearbeitungsmaschine 1 kann beispielsweise einen der Parkstellung zugeordneter RFID-Leser aufweisen, welcher das Erscheinen eines Kabelaufnahmemoduls 11 mit einer bestimmten Identität erkennt. Die Kabelbearbeitungsmaschine 1 kann dem anbringenden Bediener durch Rückmeldung (z.B. farbige Leuchten) signalisieren, ob es sich um die erwartete Kabelaufnahmemodul handelt und im Fehlerfall den nachfolgenden Wechsel sperren.

Von der Parkstellung wird das Kabelaufnahmemodul 11 vor Beginn der folgenden Produktion in die Arbeitsstellung gebracht, worauf die Kabelbearbeitungsmaschine nötigenfalls den Kabelanfang von des Kabelaufnahmemoduls in die Fördereinheit bewegt und mit dem neuen Kabel zu produzieren beginnen kann. Somit kann das Kabelmaterial in der Maschine ohne Anwesenheit einer Bedienperson gewechselt werden.

Im illustrierten Beispiel gemäss der Figuren 4 bis 6 befinden sich Park- und Arbeitsstellung auf einer als verschiebbare Platte ausgestalteten Anschlussplattform 50 mit Aufnahmen für mehrere Kabelaufnahmemodule. Die Arbeitsstellung ist jeweils diejenige, welche sich in der Maschinenlängsachse 20 befindet. Die anderen Positionen sind Parkstellungen, in welchen das Kabelaufnahmemodul 10 bei laufender Maschine eingesetzt oder entnommen werden kann.

Es können auf einer Kabelbearbeitungsmaschine 1 mehrere Park- und Arbeitsstellungen vorhanden sein. Die Kabelaufnahmemodule 10, 11 können aber auch in voneinander unabhängigen Bewegungen zwischen der Park- und der Arbeitsstellung bewegt werden, beispielsweise indem sie aus zwei Parkstellungen jeweils mit einer Drehbewegung in die Arbeitsstellung gebracht werden.

Anstelle von zwei Steckplätzen können demnach auch Anschlussplattformen 50 mit drei oder noch mehr Stecklätzen vorgesehen werden. Selbstverständlich sind auch Kabelbearbeitungsmaschinen 1 mit nur einem einzigen Steckplatz denkbar. Dieser Steckplatz kann bevorzugt derart in der Kabelbearbeitungsmaschine 1 angepasst sein, dass nach dem Aufsetzen bzw. Anschliessen des Kabelanschlussmoduls dieses bzw. das von ihm gehaltene Kabel koaxial zur Maschinenlängsachse 20 ausgerichtet ist (vgl. dazu weiter Figuren 12 und 13). Anstatt das Kabelaufnahmemodul 10 in eine Parkstellung zu bringen, kann es also auch direkt in die Arbeitsstellung gebracht werden.

Die Bewegung des Kabelaufnahmemoduls 10 in die Parkstellung oder in die Arbeitsstellung der Kabelbearbeitungsmaschine 1 können manuell oder beispielsweise mit einem automatischen Transfersystem wie einem Roboter erfolgen. Um letzteres zu erleichtern, kann das Kabelaufnahmemodul 10 mit einer mechanischen Schnittstelle ausgestattet sein, welche ein automatisches Greifen ermöglicht.

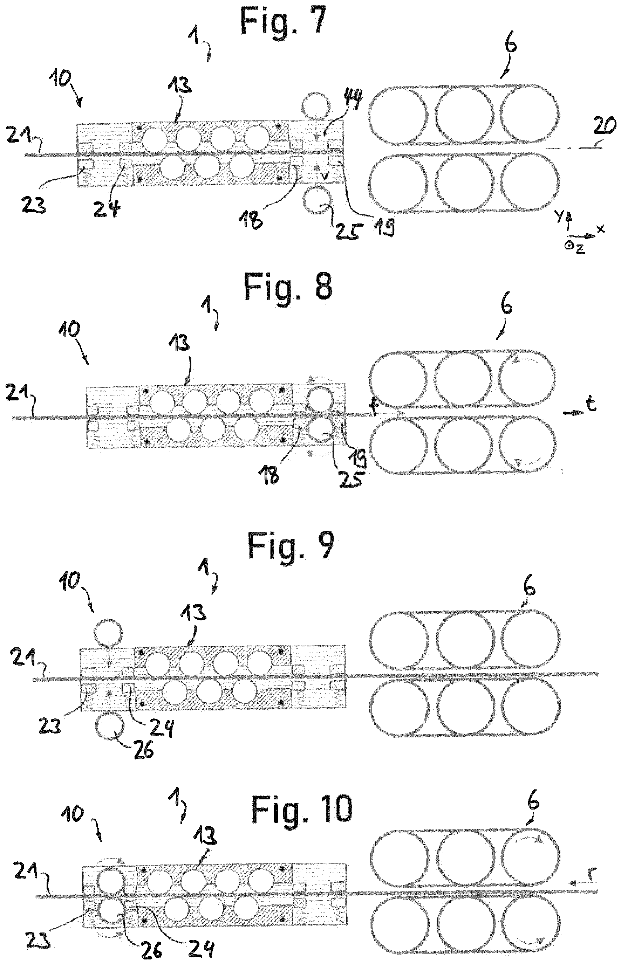

Die Kabelbearbeitungsmaschine 1 umfasst zwei Antriebsrollen-Paare. Die Figuren 7 und 8 zeigen ein erstes Antriebsrollen-Paar. Die Kabelbearbeitungsmaschine 1 umfasst mittels eines Antriebs antreibbare vordere Antriebsrollen 25, wobei die Antriebsrollen 25 dazu ausgestaltet sind, das zwischen zwei Antriebsrollen 25 eingeklemmte Kabel 21 zur Fördereinheit hin zu fördern. Mit Hilfe einer Rollenverfahreinrichtung sind die beiden Antriebsrollen 25 zum Aufbringen einer Presskraft auf das Kabel 21 relativ zueinander verfahrbar. Die Antriebsrollen 25 sind in der in Figur 7 gezeigten Ruhestellung soweit voneinander beabstandet, dass das Kabelanschlussmodul 10 beim oder nach dem Anschliessen zwischen den Antriebsrollen 25 an die Kabelbearbeitungsmaschine 1 anordenbar und befestigbar ist.

Die beiden Antriebsrollen 25 sind von der Ruhestellung in eine Aktivstellung verfahrbar und in das Kabelanschlussmodul 10 einfahrbar, dass sie das im Kabelanschlussmodul 10 befindliche Kabel 21 in der Aktivstellung klemmend kontaktieren. Die Antriebsrollen 25 sind dabei rechtwinklig zur Maschinenlängsachse 20 verfahrbar. Diese Bewegung der Antriebsrollen 25 ist in Figur 7 durch zwei Pfeile v angedeutet. Sobald die Antriebsrollen 25 in Aktivstellung sind, können sie mittels eines Antriebs in Drehung versetzt werden und so das Kabel 21 vorwärts in f-Richtung fördern. Dies ist in Figur 8 gezeigt. Der Kabelanfang des Kabels 21 gelangt so zur und in die Fördereinheit 6 und das Kabel kann auf diese Weise eingefädelt werden. Mittels der Fördereinheit 6 kann schliesslich der Kabelanfang weiter in t-Richtung gefördert werden, worauf der Einfädelvorgang abgeschlosssen ist. Die Antriebsrollen 25 können nun wieder in die Ruhestellung zurück gebracht werden. In der Regel verbleiben die Antriebsrollen 25 während dem Normalbetrieb, d.h. die Betriebsphase, bei der Kabel massenweise konfektioniert werden, in der Ruhestellung.

Das Kabelanschlussmodul 10 weist für ein Paar von Antriebsrollen 25 laterale Rolleneinführöffnungen 44 auf, über die, die Antriebsrollen 25 rechtwinklig zur Maschinenlängsachse 20 bzw. in radialer Richtung des Kabels zum Erstellen der Wirkverbindung zum vorwärts gerichteten Antreiben des Kabels 21 einfahrbar sind. Die Rolleneinführöffnungen 44 sind ersichtlicherweise im Bereich der Vorderseite des Kabelanschlussmodul 10 angeordnet. Wie etwa aus Figur 8 erkennbar ist, sind die Antriebsrollen 25 bezüglich der x-Achse zwischen den zwei Haltebacken-Paaren 18, 18' und 19, 19' angeordnet. Die Halteeinrichtung mit den Haltebacken kann bevorzugt während dem Einfädeln bereits in einer Stellung sein, in der sie das Kabel nicht mehr festhalten. Da die durch die Federn 34 bewirkte Kraft vergleichsweise klein sein kann, ist es aber auch vorstellbar, dass die klemmende Beaufschlagung des Kabels 21 durch die Haltebacken 18, 18'; 19, 19'; 23, 23'; 24, 24' nicht aufgehoben wird. Der Antrieb der Antriebsrollen 25 kann ausreichend stark sein, so dass das Kabel 21 auch bei Kontakt der Haltebacken dennoch bewegt werden kann.

Um das Kabel zuverlässiger zu fassen, weist des Kabelaufnahmemodul 10 Rolleneinführöffnungen 44 auf, welche so ausgestaltet sind, dass sie ein Einfahren der Antriebsrollen der Kabelbearbeitungsmaschine erlauben, ohne dass das Kabel diesen ausweichen kann.

Wenn die Kabelbearbeitungsmaschine 1 die Verarbeitung des Kabelmaterials beendet hat, kann ein nicht mehr benötigtes eingespanntes Kabel wieder ausgefädelt werden. Dazu weist die Kabelbearbeitungsmaschine 1 und/oder das Kabelaufnahmemodul 10 Mittel auf, mit welcher das Kabel rückwärts in das Kabelaufnahmemodul 10 gezogen werden kann, um zwischen Kabelfördereinheit und Kabelaufnahmemodul eine unkontrollierte Schlaufenbildung zu verhindern, wenn die Fördereinheit das Kabel rückwärts schieben würde. Wie ein Ausfädelvorgang durchgeführt werden kann, ist aus den Figuren 9 und 10 ersichtlich. Die Kabelbearbeitungsmaschine 1 umfasst mittels eines Antriebs antreibbare hintere Antriebsrollen 26, wobei die Antriebsrollen 26 dazu ausgestaltet sind, das zwischen zwei Antriebsrollen 26 eingeklemmte Kabel 21 in Gegenrichtung zur Haupttransportrichtung zu fördern (Pfeil r), wodurch das Kabel aus der Fördereinheit 6 heraus gefördert werden kann. Durch die Zugbewegung am Kabel 21 kann eine unerwünschte Schlaufenbildung verhindert werden. Die beiden Antriebsrollen 26 werden von der in Figur 9 gezeigten Ruhestellung und angedeutet durch die Pfeile v in eine Aktivstellung verfahren und fahren in das Kabelanschlussmodul 10 ein, so dass die beiden Antriebsrollen 26 das im Kabelanschlussmodul 10 befindliche Kabel 21 in der Aktivstellung klemmend kontaktieren. Nun können die Antriebsrollen 26 das Kabel 21 rückwärts in r-Richtung fördern. Dies ist in Figur 10 gezeigt. Sobald der Kabelanfang des Kabels 21 die Fördereinheit 6 verlässt, ist der Ausfädel-Vorgang abgeschlossen. Das Kabelanschlussmodul 10 kann von der Kabelbearbeitungsmaschine 1 gelöst und entfernt werden, wobei vorgängig die Antriebsrollen 26 wieder zurück gefahren werden und die Halteeinrichtung mit den Haltebacken 18, 18'; 19, 19'; 23, 23'; 24, 24' vorzugsweise in eine Stellung gebracht werden, in der sie das Kabel 21 klemmend zum Festhalten beaufschlagen.

Beim Ausfädeln kann die Fördereinheit 6 ebenfalls rückwärts angetrieben mit einer Geschwindigkeit, die nicht grösser ist als diejenige der betreffenden Antriebsrollen 26 ist.

Eine weitere vorteilhafte Ausgestaltung kann sich ergeben, wenn die Antriebsrollen 26 das Kabel 21 erst beim Ausfädeln berühren oder wenn die Antriebsrollen 26 auch während der Produktion zusammengefahren werden oder bleiben, um das Kabel 21 während des Vorwärtstransports mit einem entgegengesetzten Drehmoment vor dem Richtapparat zu strecken, was eine besonders präzise Richtwirkung ergibt, weil das Kabel 21 mit einer definierten Kraft an die Richtrollen 16, 17 gespannt wird.

Von den jeweiligen Antriebsrollen 25, 26 können je Paar beide Antriebsrollen aktiv angetrieben werden. Es kann jedoch auch nur eine der beide Antriebsrollen angetrieben werden, und die andere beide Antriebsrolle ist frei drehbar im Support befestigt und wird passiv über die andere Antriebsrolle angetrieben.

Das Einbringen des Kabelanfangs in den Fördereinheit kann durch die gezeigte Vorrichtung mit den Antriebsrollen 25, 26 unterstützt werden, die das Kabel 21 aus dem Kabelaufnahmemodul 10 in die Fördereinheit 6 stösst. Diese Antriebsrollen 25, 26 können wie im Ausführungsbeispiel gemäss der Figuren 7 bis 10 Bestandteil der Kabelbearbeitungsmaschine 1 oder alternativ (nicht gezeigt) des Kabelaufnahmemoduls 10 sein. Die Vorrichtung kann gemäss genannten Ausführungsbeispiel aus zwei zur Kabelbearbeitungsmaschine 1 gehörenden Antriebsrollen-Paaren bestehen, die in das Kabelaufnahmemodul eingefahren werden. Es ist aber auch denkbar, nur ein Antriebsrollen-Paar einzusetzen.

Das Verfahren zum Anschliessen eines Kabels 21 an die Anordnung zum Konfektionieren von Kabeln umfasst im Wesentlichen folgende Schritte:
1. Anbringen des mobilen Kabelanschlussmoduls 10 an das Kabel 21 im Bereich des Kabelendes bzw. am Kabelanfang, und
2. Transportieren des Kabels 21 mit dem daran angebrachten Kabelanschlussmodul 10, Transferieren des Kabelendes bzw. Kabelanfangs mit dem daran angebrachten Kabelanschlussmodul 10 zur Anordnung und Befestigen des Kabelanschlussmoduls 10 an die Kabelbearbeitungsmaschine 1 der Anordnung, wodurch das Kabel (21) angeschlossen ist, wobei das Kabelanschlussmodul nach dem Anschliessen sich in einer Parkstellung oder bereits in einer Arbeitsstellung befindet.

Das Transferieren kann dabei manuell oder automatisiert unter Verwendung eines Roboters oder einer anderen Transfereinrichtung erfolgen.

Zum Transport oder bis zum Anschliessen ist das Kabel 21 vorzugsweise derart in Kabelanschlussmodul 10 gehalten, dass es aus dem Kabelanschlussmodul 10 hinausragt (siehe z.B. Figuren 2 und 4).

Figur 11 betrifft eine Variante eines mobilen Kabelanschlussmoduls 10, das sich im Wesentlichen vom Kabelanschlussmodul 10 gemäss Figur 2 nur dadurch unterscheidet, dass mit einer maschinenlesbaren Kennung 40 ausgerüstet ist. Dank der maschinenlesbaren Kennung 40 kann vor, beim oder nach dem Anschliessen die Anordnung mit der Kabelbearbeitungsmaschine 1 mittels eines Lesegeräts erkennen, um was für ein Kabel 21 es sich genau handelt.

Das Kabelaufnahmemodul 10 kann mit einer Kennung und insbesondere mit einem Identifikationsträger mit oder ohne Datenspeicher - beispielsweise ein optischer Code (Strichcode, QR-Code, etc.) oder einem RFID-Tag - ausgestattet sein, der an der Maschine durch eine Lesevorrichtung oder durch eine Person ausgelesen werden kann.

Die Kabelrichteinheit 13 des Kabelaufnahmemoduls 10 umfasst die zwei Rollensupporte 37, 38, von welchen vorzugsweise mindestens einer in der Ebene senkrecht zu den Rollenachsen beweglich ist. Der Rollensupport 37 wird beispielsweise mit Federn in der Offenstellung gehalten. In dieser Offenstellung befinden sich die Richtrollen in einem Abstand, in welchem das Kabel problemlos hindurchgeschoben oder eingelegt werden kann und vorzugsweise nicht durch die Richtrollen gekrümmt wird.

Nachdem sich das Kabelaufnahmemodul 10 in Arbeitsstellung befindet, kann die Kabelbearbeitungsmaschine 1 die Rollensupporte 37, 38 relativ zueinander in die korrekte Position bewegen, um eine optimale Richtwirkung zu erzielen.

Die Figuren 12 und 13 betreffen eine Variante einer Kabelbearbeitungsmaschine 1, die einen einzigen Steckplatz für das Kabelanschlussmodul 10 aufweist. Wenn das Kabelanschlussmodul 10 an die Kabelbearbeitungsmaschine 1 angeschlossen ist, ist das von ihm gehaltene Kabel koaxial zur Maschinenlängsachse 20 ausgerichtet ist und befindet sich schon in einer Arbeitsstellung (Figur 13). Weiter ist etwa aus Figur 12 erkennbar, dass die Kabelbearbeitungsmaschine 1 Aktuatoren 32 umfasst, mit deren Hilfe die Aufnahmedorne 28 bewegt werden können. Dank der so bewegten Aufnahmedorne 28 kann die Kabelrichteinheit 13 verstellt werden, so dass sie wie in Figur 13 gezeigt ist, geschlossen und verschwenkt ist. Mit 28' sind die fest angeordneten bzw. unbeweglichen Aufnahmedorne bezeichnet.

Eine mögliche Ausgestaltung dafür ist, dass die beiden von Aktuatoren 32 bewegbaren Aufnahmedorne 28 für den beweglichen Rollensupport 37 es ermöglichen, den Rollensupport 37 in einer Ebene senkrecht zu den Rollenachsen mit erwünschten Kräften (z.B. pneumatische Zylinder) oder Positionen (z.B. motorischer Antrieb) zu beaufschlagen. Beispielsweise wird der rechte Aufnahmedorn 28 so eingestellt, dass sich die beiden gegenüberliegenden ausgangsseitigen Richtrollen 16, 17 gerade das Kabel 21 berühren, während der linke Aufnahmedorn 28 so mit Kraft gegen das Kabel 21 beaufschlagt wird, dass eine gewünschte Richtstärke erreicht wird.

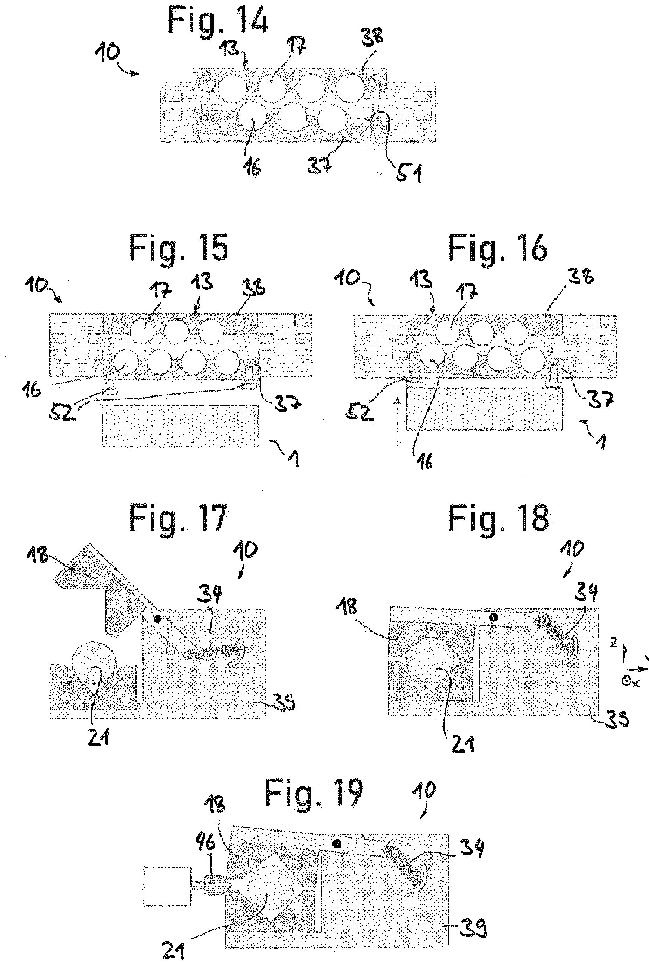

Es sind aber auch Varianten von Kabelanschlussmodulen 10 denkbar, bei welchen zum Richten des Kabels die Richtfunktion auf andere Weise gelöst ist. So zeigt etwa Figur 14 ein mobiles Kabelanschlussmodul 10 mit einer manuellen Einstellmöglichkeit der Kabelrichteinheit 13. Mittels Stellschrauben 51 kann der Rollensupport 37 der Kabelrichteinheit 13 zum Schliessen bewegt und in die in Figur 14 gezeigte schräge Ausrichtung gebracht werden. In Figur 14 ist die das mobile Kabelanschlussmodul 10 ohne Kabel gezeigt. Es kann vorteilhaft sein, das Kabel in das Kabelanschlussmodul 10 einzubringen und das Kabelanschlussmodul 10 an das Kabel anzubringen und die Kabelrichteinheit 13 an einem beliebigen Ort zu verstellen, insbesondere bevor das Kabelanschlussmodul 10 an die Kabelbearbeitungsmaschine 1 angeschlossen wird. Eine Besonderheit dieser Ausführung der Richteinheit 13 besteht somit darin, dass die beiden Rollensupporte 37, 38 auf dem Kabelaufnahmemodul 10 fixiert zueinander eingestellt werden, beispielsweise mit den zwei Stellschrauben 51.

Die Verstellung des Rollensupports 37 oder gegebenenfalls beider Rollensupporte kann manuell oder mit einer automatischen oder halbautomatischen Einstellvorrichtung an einem Rüstplatz oder direkt an der Kabelbearbeitungsmaschine erfolgen, beispielsweise, indem die Einstellung der zwei Stellschrauben 51 manuell erfolgt oder sich eine automatische Einstellvorrichtung an diese Stellschrauben 51 ankoppelt und sie dreht, bis die Kabelrichteinheit sich in der richtigen Stellung befindet.

Desweiteren kann die Kabelrichteinheit 13 des Kabelanschlussmoduls 10 so konstruiert sein, dass die Rollensupporte 37, 38 keine Einstellmöglichkeit besitzen, sondern feststehend für bestimmte Kabeltypen optimiert sind. Eine solche Konstruktion lässt sich durch den Wegfall von beweglichen Teilen besonders kostengünstig umsetzen.

Eine halbautomatische Variante ist in den Figuren 15 und 16 gezeigt. Die Kabelrichteinheit 13 des mobilen Kabelanschlussmoduls 10 weist Mittel vom Voreinstellen der geschlossen und geneigten Stellung auf. Mittels Voreinstellschrauben 52, die, wie in Figur 15 gezeigt ist, ersichtlicherweise unterschiedlich weit vom Rollensupport 37 herausragen, kann die gewünschte Stellung voreingestellt werden. Nach dem Anschliessen muss nun lediglich ein einfacher der Kabelbearbeitungsmaschine 1 zugeordneter Aktuator mit einem Anschlag in Form eines stempelartigen Stössels in s-Richtung verfahren werden, der den Rollensupport 37 wegstösst und in die in Figur 15 gezeigte Stellung bringt.

Die Figuren 17 bis 19 betreffen ein weiteres Ausführungsbeispiel eines mobilen Kabelanschlussmoduls 10. Das Kabelanschlussmodul 10 zeichnet sich durch eine spezielle Halteeinrichtung aus. Die Klemmkraft kann durch gespannte Schraubendruckfedern 34 erzeugt werden. Die Halteeinrichtung kann mechanisch so an die Bewegung des Rollensupports 37 gekoppelt werden, dass beim Zusammenfahren des Rollensupports 37 die Halteeinrichtung geöffnet wird.

Die Halteeinrichtung kann beispielsweise als bistabile Mechanik ausgestaltet werden, bei welcher die Feder 34 ohne äussere Kräfte in geschlossener oder offener Stellung verbleibt. Dadurch kann das Kabel 21 manuell eingelegt werden, ohne dass die Halteeinrichtung während des Einlegens gegen die Federkraft der Feder 34 offengehalten werden muss (Fig. 17). Am Ende des Einlegevorgangs wird die Halteeinrichtung zugeklappt und sie hält das Kabel mittels Federkraft in der vorgesehenen Position (Fig. 18). Nachdem sich das Kabelaufnahmemodul in der Arbeitsstellung befindet, kann die Kabelbearbeitungsmaschine die Halteeinrichtung durch einen geeigneten Aktuator, beispielsweise einen pneumatischen Zylinder, der ein Löseelement 46 aktiviert, lösen, damit das Kabel 21 bewegt und verarbeitet werden kann (Fig. 19). Analog kann die Kabelbearbeitungsmaschine die Halteeinrichtung wieder schliessen, nachdem das Kabel wieder in die Ausgangsposition bewegt wurde und bevor das Kabelaufnahmemodul aus der Arbeitsstellung bewegt werden soll.

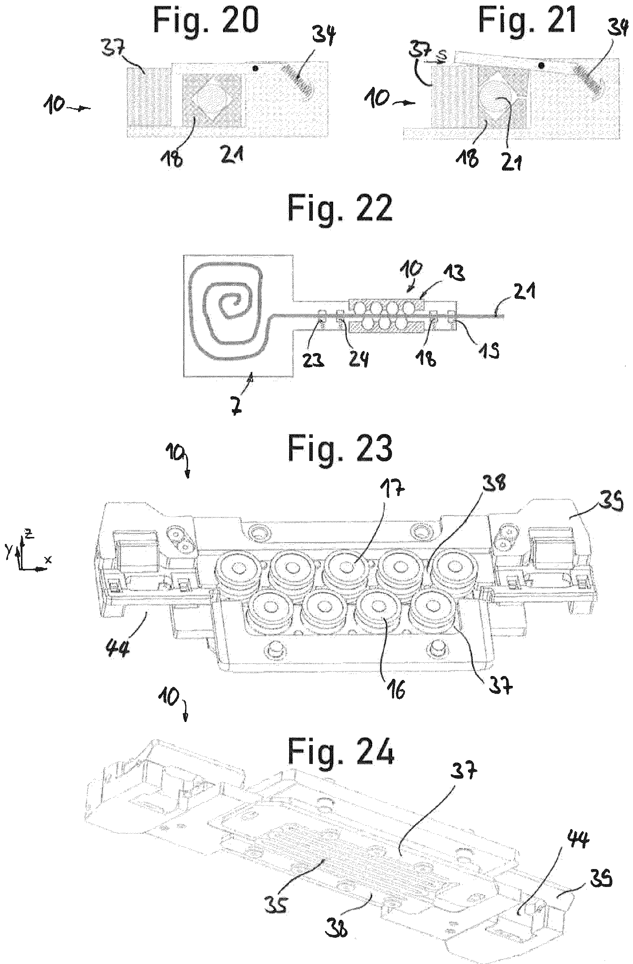

Wenn die Rollensupporte 37, 38 unbeabsichtigt zusammengedrückt werden, beispielsweise wenn das Kabelaufnahmemodul 10 beim Transport in der Hand gehalten und versehentlich zusammengedrückt wird, besteht die Gefahr, dass das Kabel 21 wegen des verlängerten Weges entlang der Richtrollen zwischen den Haltebacken nach Innen gezogen wird, beim Entspannen der Rollensupport nicht mehr gespannt ist und dadurch nicht mehr sauber zwischen den Richtrollen liegt. Um dies zu vermeiden, kann das Kabelanschlussmodul mit einer Vorrichtung versehen werden, die verhindert, dass die Rollensupporte unbeabsichtigt zusammengedrückt werden können. Eine solche Vorrichtung ist in Figur 20 gezeigt.

Figur 20 zeigt ein mobiles Kabelanschlussmodul 10 mit einem in Form einer Nase ausgestalteten Blockierelement 36, mittels welchem für den Transport des Kabelanschlussmoduls 10 verhindert wird, dass die Rollensupporte 37, 38 unbeabsichtigt zusammendrückt werden können. Die Halteeinrichtungen ist mit der erwähnten Nase versehen, welche in der das Kabel festhaltenden oder klemmenden Stellung zwischen den Rollensupporten liegt, so dass diese unerwünschte Bewegung blockiert wird. Nach dem Anschliessen kann diese Blockierung aufgehoben werden, so dass der Rollensupport 37 zum Zustellen gegen den Rollensupport 38 bewegt werden kann (siehe Figur 21). Zum Transport kann das Kabel 21 folglich derart im Kabelanschlussmodul 10 gehalten sein, dass es von den Richtrollen 16, 17 unbeaufschlagt ist und dass das Kabel 21 erst nach dem Anschliessen von den Richtrollen 16, 17 zum Richten des Kabels beaufschlagt wird.

Wie Figur 22 zeigt, kann das Kabelanschlussmodul 10 mit dem Kabelgebinde 7 verbunden sein und zusammen mit diesem eine mobile Einheit bilden. Eine Besonderheit dieser Variante des Kabelaufnahmemoduls 10 besteht darin, dass sie die Funktion der Kabelgebindes integriert, indem ein Behälter des Gebindes an das Kabelaufnahmemodul 10 angeformt oder auf andere Weise befestigt ist, aus welchem Behälter das Kabel gezogen oder wieder zurückgestossen wird. Dies ist besonders gut machbar für feine Kabel, welche wenig Volumen beanspruchen und enge Biegeradien zulassen. Diese Art von Kabelanschlussmodule 10 kann als Ganzes an Lager gelegt werden und ermöglicht eine sehr einfache und platzsparende Logistik.

Es sind weiter auch lösbare Verbindungen zwischen Kabelanschlussmodul 10 und Kabelgebinde 7 denkbar. Das Kabelanschlussmodul 10 kann entsprechend dazu ausgelegt sein, vor dem Anschliessen, mit dem Kabelgebinde 7 verbunden zu werden, so dass das Kabelanschlussmodul 10 mit dem Kabelgebinde 7 gelagert und transportiert werden kann.

Konstruktive Details eines mobilen Kabelanschlussmoduls 10 zeigen die Figuren 23 und 24. Die Richtrollen 16 der ersten Rollengruppe 14 sind frei drehbar am plattenartig ausgestalteten Rollensupport 37 befestigt; die Richtrollen 17 der zweiten Rollengruppe 15 sind frei drehbar am plattenartig ausgestalteten Rollensupport 38 befestigt. Das Modulgestell 39 in Form einer Grundplatte dient zum Tragen der beiden Rollensupporte 37, 38. Die Rollensupporte 37, 38 stehen mittels einer Federanordnung zum Erzeugen einer Vorspannkraft für die Kabelrichteinheit (13) in einer Offenstellung in einer Wirkverbindung. Vorliegend sind die Rollensupporte 37, 38 der Kabelrichteinheit 13 über eine mit 35 bezeichnete Federanordnung miteinander verbunden und einstückig ausgebildet sind. Diese Federanordnung 35 ist in Figur 34 erkennbar. Die Federanordnung 35 ist flächig ausgestaltet und kann zusammen mit den Rollensupporten 37, 38 aus einem gemeinsamen Blech hergestellt werden. Die Federanordnung 35 kann durch ein gelasertes Stahlblech hergestellt werden. Die Federanordnung 35 weist ersichtlicherweise eine schlangenförmige oder maänderartige Struktur auf. Zum Richten des Kabels werden die Rollensupporte 37, 38 in einer Zustellbewegung aufeinander zu bewegt.

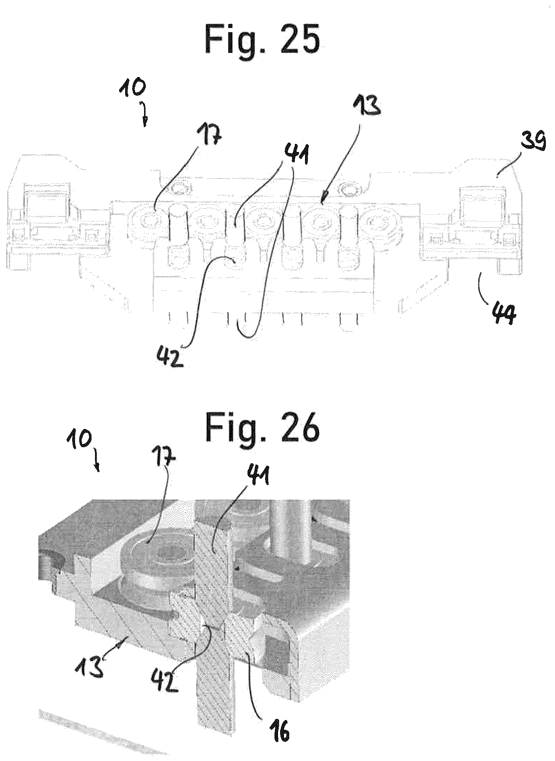

Es sind weiter auch mobilen Kabelanschlussmodul denkbar, bei welchen wenigstens ein Teil der Richtrollen nicht frei drehbar in den Rollensupporte befestigt sind. Eine solche Ausführung ist in Figur 25 gezeigt. Die Kabelrichteinheit 13 des mobilen Kabelanschlussmoduls 10 weist einen Rollensupporte 37 für die Rollengruppen 14 auf, in welchen die jeweiligen Richtrollen 16 der Rollengruppe lose gehalten sind. Die frei drehbare Lagerung der Richtrollen 16 ergibt sich dadurch, dass von der Kabelbearbeitungsmaschine 1 her Achselemente 41 in Lagerbuchsen 42 der Richtrollen 16 eingeführt werden. Das so erstellte Lager für die nun um die Achselemente 41 frei drehbaren Richtrollen 16 ist aus der Detailansicht der Figur 26 besonders gut erkennbar.

Ein Teil der Rollen (i.c. die Richtrollen 16) können somit auch einzeln lose im Kabelaufnahmemodul 10 gehalten sein, weshalb dann kein eigentlicher Rollensupport notwendig ist. Die Kabelbearbeitungsmaschine 1 kann Achsen bzw. Achselemente 41 mit konischen Spitzen aufweisen, welche in die Löcher (gebildet durch die Lagerbuchsen 42) der Richtrollen 16 eingeschoben werden. Die Kabelbearbeitungsmaschine 1 fixiert so die Richtrollen und bringt sie dann sinngemäss wie beim früher beschriebenen Rollensupport in die vorgesehene Position. Die Lager für die Rotation der Richtrollen 16 können Teil der Kabelbearbeitungsmaschine 1 sein, so dass die Richtrollen 16 keine eigenen Lager benötigen und auf Seite des Kabelaufnahmemoduls 10 Kosten gespart werden können.

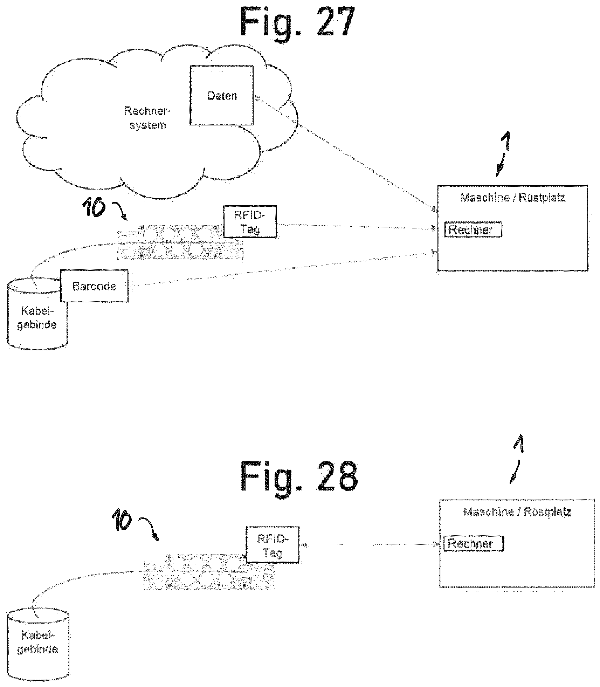

Wenn das Kabelanschlussmodul 10 mit einer maschinenlesbaren Kennung 40 ausgerüstet ist, ergeben sich verschiedene Vorteile. Figur 27 zeigt eine Anordnung, eine Leseeinrichtung 47 umfasst, die ausgestaltet ist, die ein von einem Kabelanschlussmodul 10 gehaltenes Kabel 21 betreffende Daten zu erfassen. An einem Arbeitsplatz zum Rüsten (kurz «Rüstplatz») des Kabelaufnahmemoduls 10 können Identifikation, Eigenschaften, Einstellwerte, Verarbeitungsparameter und weitere Daten des Kabelmaterials und des Kabelaufnahmemoduls in ein Rechnersystem oder auf die Kennung 40 und insbesondere auf den Identifikationsträger geschrieben und die Daten miteinander verknüpft und abgespeichert werden. Als Rüstplatz kann auch eine Kabelbearbeitungsmaschine 1 selbst verwendet werden, welche die entsprechenden Vorrichtungen aufweist. Die Person am Rüstplatz kann beispielsweise die Identifikation des Kabelgebindes, wenn beispielhaft ein Strichcode verwendet wird, mittels Barcodescanner einlesen, worauf der Rechner am Rüstplatz die zugehörigen Material- und Prozessparameter aus einem übergeordneten Rechnersystem ermittelt. Das Kabelanschlussmodul 10 ist beispielhaft mit einem RFID-Tag 40 ausgerüstet. Nachdem die Person das Kabel in das Kabelaufnahmemodul 10 eingesetzt hat, liest sie mit einem RFID-Leser als Leseeinrichtung 47 am Rüstplatz die Identifikation und weitere Daten des Kabelaufnahmemoduls 10. Dieser Schritt kann selbstverständlich auch automatisiert erfolgen. Der Rechner des Rüstplatzes verknüpft - wie aus Figur 27 hervorgeht - die Daten von Kabelgebinde und Kabelanschlussmodul und speichert sie in einem übergeordneten Rechnersystem oder auf dem RFID-Tag 40.

Wenn eine Kabelanschlussmodul 10 an der Kabelbearbeitungsmaschine 10 angeschlossen ist, kann diese die gespeicherten Daten über den RFID-Tag 40 beziehen oder das Kabelaufnahmemodul identifizieren und verknüpften Daten über das übergeordnete Rechnersystem beziehen, daraus relevante Prozessdaten zur Steuerung der Kabelbearbeitungsmaschine 1 oder zur Rückverfolgbarkeit des produzierten Kabels ableiten oder den Kabelverbrauch sowie die verbleibende Kabelmenge zurückschreiben.

Die Datenspeicherung kann, auch lediglich dazu verwendet werden, dass relevante Einstellungen, welche zuletzt an der Kabelbearbeitungsmaschine 10 mit dem Kabelaufnahmemodul 10 vorgenommen wurden (beispielsweise die letzte Stellung des Rollensupports), von der Kabelbearbeitungsmaschine 10, wie aus Figur 28 entnehmbar ist, auf den RFID-Tag 40 des Rollensupports geschrieben oder wie in Figur 27 gezeigt via übergeordnetem Rechnersystem des Kabelaufnahmemoduls 10 zugeordnet werden.

Ein an das Kabelaufnahmemodul 10 angebrachtes RFID-Tag 40 kann auch zur Ortung des Kabelaufnahmemoduls 10 verwendet werden, so dass sie einfach auffindbar ist oder eine automatische Inventur durchgeführt werden kann.

Aus den gespeicherten Verbrauchsdaten kann das übergeordnete Rechnersystem zudem den Bedarf für Kabelmaterial ermitteln und automatisch Bestellung von neuem Kabelmaterial auslösen oder eine Wartung des Kabelaufnahmemoduls und/oder der Kabelbearbeitungsmaschine 1 anfordern.

## Patentansprüche

1. Mobiles Kabelanschlussmodul (10) für eine Anordnung zum Konfektionieren von Kabeln, wobei das Kabelanschlussmodul (10) eine Halteeinrichtung umfasst, mittels welcher das Kabelanschlussmodul (10) an ein Kabel (21) anbringbar ist und dass das Kabelanschlussmodul (10) derart ausgestaltet ist, dass es zusammen mit dem Kabel (21) an eine Kabelbearbeitungsmaschine (1) der Anordnung anschliessbar ist.

2. Kabelanschlussmodul (10) nach Anspruch 1, **dadurch gekennzeichnet, dass** die Halteeinrichtung () wenigstens zwei einander gegenüberliegende Haltebacken (18, 19; 23, 24) zum klemmenden Festhalten des Kabels (21) umfasst.

3. Kabelanschlussmodul (10) nach Anspruch 1 oder 2, **dadurch gekennzeichnet, dass** das Kabelanschlussmodul (10) zum Richten des Kabels (21) und zum Bilden einer Kabelrichteinheit (13) zwei Rollengruppen (14, 15) aufweist, wobei jede Rollengruppe jeweils über eine und vorzugsweise mehrere Richtrollen (16 , 17) verfügt, wobei das Kabel (21) in einer Transportrichtung (x) alternierend jeweils zwischen den Richtrollen (16 , 17) der beiden Rollengruppen (14, 15) durchführbar ist.

4. Kabelanschlussmodul (10) nach Anspruch 3, **dadurch gekennzeichnet, dass** die Kabelrichteinheit (13) zwei Rollensupporte (37, 38) für die beiden Rollengruppen (14, 15), an welchen die jeweiligen Richtrollen (16, 17) der jeweiligen Rollengruppe (14, 15) frei drehbar befestigt sind und dass ein Kabelmodulgestell (39) zum Tragen der beiden Rollensupporte (37, 38), wobei vorzugsweise (nur) einer der Rollensupporte (37) in einer Schliessrichtung (s) verschiebbar im Kabelmodulgestell (39) gelagert ist und dass das Kabelanschlussmodul (10) über wenigstens einer der Rollensupporte (37, 38) der Kabelrichteinheit (13) mit der Kabelbearbeitungsmaschine (1) lösbar verbindbar ist und/oder dass das Kabelanschlussmodul (10) über das Kabelmodulgestell (39) mit der Kabelbearbeitungsmaschine (1) lösbar verbindbar ist.

5. Kabelanschlussmodul (10) nach einem der Ansprüche 1 bis 4, **dadurch gekennzeichnet, dass** das Kabelanschlussmodul (10) laterale Rolleneinführöffnungen (44) aufweist, über die, wenn erforderlich, die Antriebsrollen (25, 26) in radialer Richtung des Kabels zum Erstellen einer Wirkverbindung zum vorwärts- und/oder rückwärts gerichteten Antreiben des Kabels (21) einfahrbar sind.

6. Kabelanschlussmodul (10) nach einem der Ansprüche 1 bis 5, **dadurch gekennzeichnet, dass** das Kabelanschlussmodul (10) dazu ausgelegt ist, mit einem Kabelgebinde (7) verbunden zu werden, so dass das Kabelanschlussmodul (10) mit dem Kabelgebinde (7) gelagert und transportiert werden kann.

7. Kabelanschlussmodul (10) nach einem der Ansprüche 1 bis 6, **dadurch gekennzeichnet, dass** das Kabelanschlussmodul (10) mit einer maschinenlesbaren Kennung (40) ausgerüstet ist.

8. Anordnung zum Konfektionieren von Kabeln mit einer Kabelbearbeitungsmaschine (1) mit wenigstens einer und vorzugsweise mehreren Bearbeitungsstationen (2, 3), einer beispielsweise einen Kabelgreifer umfassenden Zuführeinheit (4) zum Zuführen eines Kabelendes des Kabels (21) zu einer der Bearbeitungsstationen (2), **dadurch gekennzeichnet, dass** die Kabelbearbeitungsmaschine (1) eine Befestigungseinrichtung aufweist, über welche ein ein Kabel haltendes mobiles Kabelanschlussmodul (10) insbesondere gemäss einem der Ansprüche 1 bis 7, an die Kabelbearbeitungsmaschine lösbar befestigbar oder befestigt ist.

9. Anordnung nach Anspruch 8, **dadurch gekennzeichnet, dass** sie weiter eine einer Kabelvorbehandlungsstation mit einer Kabelrichteinheit (13) umfasst, wobei die Kabelrichteinheit (13) dem Kabelanschlussmodul (10) zugordnet ist und somit mobil ausgestaltet ist.

10. Anordnung nach einem der Ansprüche 8 bis 9, **dadurch gekennzeichnet, dass** die Kabelbearbeitungsmaschine (1) eine Anschlussplattform (50) für mehrere Kabelanschlussmodule (10, 11) zum wahlweisen Bearbeiten eines Kabels (21, 22) aus einem der Kabelanschlussmodule (10, 11) aufweist, wobei die Anschlussplattform (50) derart mittels eines Verstellmechanismus bewegbar ist, dass die Kabelanschlussmodule (10, 11) zwischen einer Arbeitsstellung und einer Parkstellung verstellbar sind.

11. Anordnung nach einem der Ansprüche 8 bis 10, **dadurch gekennzeichnet, dass** die Kabelbearbeitungsmaschine (1) mittels eines Antriebs antreibbaren Antriebsrollen (25, 26) umfasst, wobei die Antriebsrollen (25, 26) in einer Offenstellung soweit voneinander beabstandet oder positioniert sind, dass das Kabelanschlussmodul (10) zwischen den Antriebsrollen (25, 26) an die Kabelbearbeitungsmaschine (1) anordenbar und befestigbar ist und dass die Antriebsrollen 25, 26) von der Offenstellung in eine Aktivstellung verfahrbar und in das Kabelanschlussmodul (10) einfahrbar sind, dass sie das im Kabelanschlussmodul (10) befindliche Kabel (21) in der Aktivstellung einklemmend kontaktieren.

12. Anordnung nach Anspruch 11, **dadurch gekennzeichnet, dass** die Kabelbearbeitungsmaschine (1) zum Bilden eines vorderen und eines hinteren Antriebsrollenpaars jeweils zwei Antriebsrollen (25, 26) umfasst, wobei die Antriebsrollen (26) des vorderen Antriebsrollenpaars zum Einfädeln des Kabels (21) in die Kabelbearbeitungsmaschine (1) dienen und die Antriebsrollen (25) des hinteren Antriebsrollenpaars zum Ausfädeln des Kabels (21) aus der Kabelbearbeitungsmaschine (1) vorgesehen sind.

13. Anordnung nach einem der Ansprüche 8 bis 12, **dadurch gekennzeichnet, dass** sie eine Leseeinrichtung (47) umfasst, die ausgestaltet ist, die ein von einem Kabelanschlussmodul (10) gehaltenes Kabel (21) betreffende Daten zu erfassen.

14. Verfahren zum Anschliessen eines Kabels (21) an eine Anordnung zum Konfektionieren von Kabeln mit wenigstens einer Bearbeitungsstation (2), und einer Zuführeinheit (4) zum Zuführen eines Kabelendes des Kabels (21) zur wenigstens einen Bearbeitungsstationen (2), insbesondere einer Anordnung nach einem der Ansprüche 8 bis 13, umfassend die Schritte:
- Anbringen eines Kabelanschlussmoduls (10) an ein Kabel (21) im Bereich des Kabelendes,
- Transferieren des Kabelendes mit dem daran angebrachten Kabelanschlussmodul (10) zur Anordnung und Befestigen des Kabelanschlussmoduls (10) an eine Kabelbearbeitungsmaschine (1) der Anordnung, wodurch das Kabel (21) angeschlossen ist.

15. Verfahren nach Anspruch 14, **dadurch gekennzeichnet, dass** zum Transport oder bis zum Anschliessen das Kabel (21) derart in Kabelanschlussmodul (10) gehalten ist, dass es aus dem Kabelanschlussmodul (10) hinausragt.
